(19) Europäisches Patentamt
European Patent Office
Office européen des brevets

(11) EP 4 541 828 A1

(12) **EUROPEAN PATENT APPLICATION**
published in accordance with Art. 153(4) EPC

(43) Date of publication:
**23.04.2025 Bulletin 2025/17**

(21) Application number: **23823739.0**

(22) Date of filing: **02.06.2023**

(51) International Patent Classification (IPC):
***C08F 226/06*** *(2006.01)* ***C08F 220/04*** *(2006.01)*
***C08F 220/06*** *(2006.01)* ***C08K 3/02*** *(2006.01)*
***C08K 3/04*** *(2006.01)* ***C08K 7/06*** *(2006.01)*
***C08L 39/04*** *(2006.01)* ***H01M 4/62*** *(2006.01)*

(52) Cooperative Patent Classification (CPC):
**C08F 220/04; C08F 220/06; C08F 226/06; C08K 3/02; C08K 3/04; C08K 7/06; C08L 39/04; H01M 4/62**

(86) International application number:
**PCT/JP2023/020682**

(87) International publication number:
**WO 2023/243446 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 JP 2022098264**
**27.02.2023 JP 2023028281**

(71) Applicant: **Nippon Shokubai Co., Ltd.**
**Osaka-shi, Osaka 541-0043 (JP)**

(72) Inventor: **IKEMOTO, Yui**
**Suita-shi, Osaka 564-0034 (JP)**

(74) Representative: **Cabinet Beau de Loménie**
**158, rue de l'Université**
**75340 Paris Cedex 07 (FR)**

(54) **N-VINYL LACTAM COPOLYMER AND COMPOSITION**

(57) The present invention aims to provide an N-vinyl lactam copolymer and a composition each retaining an excellent ability to disperse carbon and excellent solubility in water but less dissolving in a carbonate electrolyte solvent. The present invention relates to an N-vinyl lactam copolymer containing: a structural unit (A) derived from an acid group-containing monomer salt; and a structural unit (B) derived from an N-vinyl lactam monomer, an amount of the structural unit (A) being 30% by mass or less based on a total amount of the structural unit (A) and the structural unit (B), the total amount being taken as 100% by mass, the N-vinyl lactam copolymer having a weight average molecular weight of 1,000 or more and 100,000 or less and a K value of 12 to 60 as determined by the Fikentscher method.

EP 4 541 828 A1

## Description

TECHNICAL FIELD

The present disclosure relates to N-vinyl lactam copolymers and compositions.

BACKGROUND ART

N-vinyl lactam polymers such as polyvinylpyrrolidone have been used in a wide range of fields as water-soluble, safe functional polymers. For example, they are used in cosmetics, pharmaceutical and agrochemical intermediates, food additives, photosensitive electronic materials, tackifiers, and other applications, as well as in various special industrial applications (e.g., production of hollow fiber membranes) and in the field of battery materials.

Battery positive electrode pastes suggested include a copolymer of stearyl methacrylate, methoxypolyethylene glycol methacrylate, and methacrylamide (See Patent Literature 1).

Dispersants for carbon materials suggested include a copolymer containing acrylonitrile and N-vinylpyrrolidone (See Patent Literature 2).

Also suggested is a carbon nanotube dispersion for electrodes containing carbon nanotube, polyvinylpyrrolidone, N-methyl-2-pyrrolidone, and an amine compound (See Patent Literature 3).

CITATION LIST

- Patent Literature

Patent Literature 1: JP 2018-170218 A
Patent Literature 2: JP 2016-65142 A
Patent Literature 3: JP 6531926 B

SUMMARY OF INVENTION

- Technical Problem

Polyvinylpyrrolidone has an excellent ability to disperse carbon but dissolves in carbonate electrolyte solvents in batteries, impairing battery performance. Furthermore, the copolymers described in these patent literature documents can be prevented from dissolving in electrolyte solvents but have low solubility in water and can only be used as positive electrode materials.

In response to such problems, the present disclosure aims to provide an N-vinyl lactam copolymer and a composition each retaining an excellent ability to disperse carbon and excellent solubility in water but less dissolving in a carbonate electrolyte solvent.

- Solution to Problem

As a result of intensive studies, the present inventor has found that an N-vinyl lactam copolymer containing predetermined components as constituent monomers in a compositional ratio within a predetermined range can retain an excellent ability to disperse carbon and excellent solubility in water but less dissolves in the above-described electrolyte solvents. Thereby, the above problems have been successfully solved, and the present invention has been completed.

The present invention encompasses the following N-vinyl lactam copolymers and the like.

(1) An N-vinyl lactam copolymer containing:

a structural unit (A) derived from an acid group-containing monomer salt; and
a structural unit (B) derived from an N-vinyl lactam monomer,
an amount of the structural unit (A) being 30% by mass or less based on a total amount of the structural unit (A) and the structural unit (B), the total amount being taken as 100% by mass,
the N-vinyl lactam copolymer having a weight average molecular weight of 1,000 or more and 100,000 or less and a K value of 12 to 60 as determined by the Fikentscher method.

(2) The N-vinyl lactam copolymer according to (1), wherein the structural unit (A) derived from an acid group-containing monomer salt includes at least one of a structural unit (A1) derived from a carboxy group-containing monomer salt or a structural unit (A2) derived from a sulfonic acid group-containing monomer salt.
(3) The N-vinyl lactam copolymer according to (1) or (2),
wherein when the structural unit (A) includes the structural unit (A1), an amount of the structural unit (A1) is 15% by mass or less based on the total amount, which is 100% by mass, of the structural unit (A) and the structural unit (B).
(4) The N-vinyl lactam copolymer according to any one of (1) to (3),
wherein when the structural unit (A) includes the structural unit (A2), an amount of the structural unit (A2) is 30% by mass or less based on the total amount, which is 100% by mass, of the structural unit (A) and the structural unit (B).
(5) The N-vinyl lactam copolymer according to any one of (1) to (4),
wherein the N-vinyl lactam copolymer has a solubility in water of 1% by mass or higher.
(6) The N-vinyl lactam copolymer according to any one of (1) to (5),
wherein the N-vinyl lactam copolymer has a solubility in an electrolyte solvent of 1% by mass or lower.
(7) The N-vinyl lactam copolymer according to any one of (1) to (6),
wherein the N-vinyl lactam copolymer has a weight average molecular weight of 5,000 or more and 100,000 or less.
(8) The N-vinyl lactam copolymer according to any one of (1) to (7),
wherein the structural unit (A1) derived from a carboxy group-containing monomer salt is a structural unit derived from at least one selected from the group consisting of lithium acrylate, sodium acrylate, potassium acrylate, and ammonium acrylate.
(9) The N-vinyl lactam copolymer according to any one of (1) to (8),
wherein the structural unit (A2) derived from a sulfonic acid group-containing monomer salt is a structural unit derived from at least one selected from the group consisting of sodium, lithium, potassium, and ammonium 2-acrylamido-2-methyl-1-propanesulfonates, sodium, lithium, potassium, and ammonium 2-hydroxy-3-allyloxypropanesulfonates, sodium, lithium, potassium, and ammonium 2-sulfoethylmethacrylates, sodium, lithium, potassium, and ammonium vinylsulfonates, and sodium, lithium, potassium, and ammonium p-styrenesulfonates.
(10) A composition containing:

an N-vinyl lactam copolymer containing a structural unit (A) derived from an acid group-containing monomer salt and a structural unit (B) derived from an N-vinyl lactam monomer; and
a carbon material.

(11) The composition of (10), further containing at least one of N-methyl-2-pyrrolidone or water.
(12) The composition according to (10) or (11), wherein the carbon material includes at least one selected from the group consisting of carbon black, carbon nanofibers, and carbon nanotubes.
(13) The composition according to any one of (10) to (12),
wherein the structural unit (A) derived from an acid group-containing monomer salt includes at least one of a structural unit (A1) derived from a carboxy group-containing monomer salt or a structural unit (A2) derived from a sulfonic acid group-containing monomer salt.
(14) The composition according to any one of (10) to (13),
wherein the structural unit (A) derived from an acid group-containing monomer salt is the structural unit (A1) derived from a carboxy group-containing monomer salt.
(15) A method for producing the N-vinyl lactam copolymer according to any one of (1) to (9), the method including polymerizing monomer components including an acid group-containing monomer salt and an N-vinyl lactam monomer.

- Advantageous Effects of Invention

The present disclosure provides an N-vinyl lactam copolymer and a composition each retaining an excellent ability to disperse carbon and excellent solubility in water but less dissolving in a carbonate electrolyte solvent.

DESCRIPTION OF EMBODIMENTS

Embodiments of the present disclosure are described in detail below. The following description of the preferred embodiments is merely exemplary in nature and is not intended to limit the present disclosure, its applications, or its uses.
In the following description, unless otherwise specified, "%" means "% by mass", "parts" means "parts by mass", and "A to B" indicating a range means "A or more and B or less". In the present disclosure, "(meth)acrylate" means "acrylate" or "methacrylate", and "(meth)acrylic" means "acrylic" or "methacrylic".

N-vinyl lactam copolymer

The N-vinyl lactam copolymer of the present disclosure contains a structural unit (A) derived from an acid group-containing monomer salt and a structural unit (B) derived from an N-vinyl lactam monomer. An amount of the structural unit (A) is 30% by mass or less based on a total amount of the structural unit (A) and the structural unit (B), the total amount being taken as 100% by mass. The N-vinyl lactam copolymer has a weight average molecular weight of 1,000 or more and 100,000 or less and a K value of 12 to 60 as determined by the Fikentscher method.

The N-vinyl lactam copolymer of the present disclosure having such a feature retains solubility in water and less dissolves in a carbonate electrolyte solvent. Conventional polymers disclosed in Patent Literatures 1 to 3 and the like do not have a sufficient ability to disperse carbon materials used as positive electrode materials in a dispersion, and may impair battery performance due to an increased amount of the impurities such as residual monomers. On the other hand, the N-vinyl lactam copolymer contains a reduced amount of the impurities such as residual monomers, and also has a good balance between the electrostatic repulsion owing to a salt of the acid group and the adsorptivity to carbon owing to the N-vinyl lactam. Thus, the N-vinyl lactam copolymer also has an excellent ability to disperse carbon materials.

An acid group-containing monomer as the precursor of the acid group-containing monomer salt may be a compound having an acid group and an ethylenically unsaturated hydrocarbon group.

Non-limiting examples of the acid group include a carboxy group, a sulfonic acid group, and a phosphate group. The acid group is preferably a carboxy group or a sulfonic acid group.

Examples of the acid group-containing monomer include a carboxy group-containing monomer, a sulfonic acid group-containing monomer, and a phosphate group-containing monomer.

The carboxy group-containing monomer may be any monomer containing a carboxy group and an ethylenically unsaturated hydrocarbon group, and examples thereof include unsaturated monocarboxylic acid monomers such as (meth)acrylic acid, crotonic acid, tiglic acid, 3-methylcrotonic acid, 2-methyl-2-pentenoic acid, and itaconic acid, and unsaturated dicarboxylic acid monomers such as maleic acid, itaconic acid, mesaconic acid, citraconic acid, fumaric acid, and 2-methyleneglutaric acid. Of these, (meth)acrylic acid and maleic acid are preferred, with (meth)acrylic acid being more preferred.

The sulfonic acid group-containing monomer may be any monomer containing a sulfonic acid group and an ethylenically unsaturated hydrocarbon group, and examples thereof include 2-acrylamido-2-methyl-1-propanesulfonic acid, 2-hydroxy-3-allyloxypropanesulfonic acid, 2-sulfoethylmethacrylic acid, p-styrenesulfonic acid, 2-(meth)allyloxyethylenesulfonic acid, α-methyl-p-styrenesulfonic acid, vinylsulfonic acid, vinylsulfamic acid, (meth)allyl sulfonic acid, isoprene sulfonic acid, 4-(allyloxy)benzenesulfonic acid, 1-methyl-2-propene-1-sulfonic acid, 1,1-dimethyl-2-propene-1-sulfonic acid, 3-butene-1-sulfonic acid, 1-butene-3-sulfonic acid, 2-acrylamido-1-methylpropanesulfonic acid, 2-acrylamidopropanesulfonic acid, 2-acrylamido-n-butanesulfonic acid, 2-acrylamido-2-phenylpropanesulfonic acid, and 2-((meth)acryloyloxy)ethanesulfonic acid. Of these, 2-acrylamido-2-methyl-1-propanesulfonic acid, 2-hydroxy-3-allyloxypropanesulfonic acid, 2-sulfoethylmethacrylic acid, vinylsulfonic acid, and p-styrenesulfonic acid are preferred, with 2-acrylamido-2-methyl-1-propanesulfonic acid being more preferred.

The phosphate group-containing monomer may be any monomer containing a phosphate group and an ethylenically unsaturated hydrocarbon group, and examples thereof include (meth)acryloyloxyalkyl phosphate esters such as (meth)acryloyloxyethyl phosphate and (meth)acryloyloxyisopropyl phosphate; and alkenyl phosphate esters such as vinyl phosphate, allyl phosphate, propenyl phosphate, isopropenyl phosphate, butenyl phosphate, pentenyl phosphate, octenyl phosphate, decenyl phosphate, and dodecenyl phosphate.

The N-vinyl lactam copolymer of the present disclosure preferably contains a structural unit (A1) derived from a carboxy group-containing monomer salt and/or a structural unit (A2) derived from a sulfonic acid group-containing monomer salt. More preferably, the copolymer contains the structural unit (A1).

In a preferred embodiment of the present invention, the N-vinyl lactam copolymer of the present disclosure contains a structural unit derived from a (meth)acrylic acid salt as a carboxy group-containing monomer salt. In this case, the precursor (monomer) before polymerization may be acrylic acid and/or methacrylic acid. In the obtained N-vinyl lactam copolymer, the acrylic acid and/or methacrylic acid are/is not in the form of an acid and are/is in the form of a carboxylic acid salt.

The N-vinyl lactam copolymer of the present disclosure may be produced by any method. An acid group-containing monomer salt such as a (meth)acrylic acid salt may be used as a monomer component. Alternatively, an unneutralized acid group-containing monomer may be subjected to the polymerization reaction and the polymer may be neutralized to a neutralized salt. To reduce the amount of the impurities such as residual monomers, an acid group-containing monomer salt such as a (meth)acrylic acid salt is preferably used as a monomer component.

The structural unit (A) derived from an acid group-containing monomer salt has the same structure as the structure of a structural unit obtained by converting a polymerizable carbon-carbon double bond group of the acid group-containing monomer salt to a single bond.

When the structural unit (A) is a structural unit derived from a (meth)acrylic acid salt, the structural unit (A) of the

present invention further includes a structural unit obtained by polymerization reaction using a monomer such as acrylamide or acrylonitrile, hydrolysis, and neutralization reaction or the like to form a carboxylic acid salt.

The (meth)acrylic acid is not limited as long as it is at least one selected from acrylic acid and methacrylic acid. It is preferably acrylic acid. The structural unit derived from a (meth)acrylic acid salt is preferably a structural unit derived from an acrylic acid salt in that the N-vinyl lactam copolymer of the present disclosure can contain a more sufficiently reduced amount of residual monomers and have solubility in water and an electrolyte solvent adjustable as designed.

The N-vinyl lactam copolymer of the present disclosure contains the structural unit (A) derived from an acid group-containing monomer salt, and examples of the salt include alkali metal salts, alkaline earth metal salts, ammonium salts, organic ammonium salts, and organic amine salts. The salt may be any salt including at least one selected from these salts.

Examples of the alkali metal salts include lithium salts, sodium salts, and potassium salts. Examples of the alkaline earth metal salts include calcium salts and magnesium salts.

Examples of the organic ammonium salts include methylammonium salts, ethylammonium salts, dimethylammonium salts, diethylammonium salts, trimethylammonium salts, and triethylammonium salts.

Examples of the organic amine salts include alkanolamine salts such as ethanolamine salts, diethanolamine salts, triethanolamine salts, monoisopropanolamine salts, diisopropanolamine salts, triisopropanolamine salts, hydroxyethyldiisopropanolamine salts, dihydroxyethylisopropanolamine salts, tetrakis(2-hydroxypropyl)ethylenediamine, and pentakis(2-hydroxypropyl)diethylenetriamine. Of these, diethanolamine salts, diisopropanolamine salts, triisopropanolamine salts, hydroxyethyldiisopropanolamine salts, tetrakis(2-hydroxypropyl)ethylenediamine salts, and pentakis(2-hydroxypropyl)diethylenetriamine salts are preferred, with diethanolamine salts, triisopropanolamine salts, and hydroxyethyldiisopropanolamine salts being more preferred.

The salt is preferably an alkali metal salt, an alkaline earth metal salt, or an ammonium salt. The salt is more preferably an alkali metal salt or an ammonium salt, still more preferably a lithium salt, a sodium salt, a potassium salt, or an ammonium salt.

The salt is particularly preferably a lithium salt or a sodium salt.

The salt is preferably any of the above-described salts in that the N-vinyl lactam copolymer of the present disclosure can have a good withstand voltage, prevent or reduce the generation of volatile substances, and more sufficiently prevent or reduce the impairment of battery performance.

The structural unit derived from a (meth)acrylic acid salt can be represented by the following formula (1):

[Chem. 1]

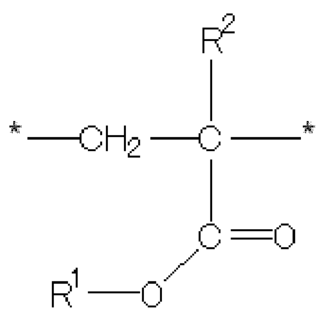

Formula (1)

wherein $R^1$ represents at least one selected from a metal atom, an ammonium salt, an organic ammonium salt, and an organic amine salt; and $R^2$ is a hydrogen atom or a methyl group.

Each of the asterisks represents an atom in another structural unit to which the structural unit represented by the formula (1) is bonded, with the another structural unit being the same as or different from the structural unit represented by the formula (1).

$R^1$ in the formula (1) is not limited as long as it is at least one selected from a metal atom, an ammonium salt, an organic ammonium salt, and an organic amine salt, and preferred forms thereof are the same as those of the above-described salts. $R^2$ in the formula (1) is not limited as long as it is a hydrogen atom and/or a methyl group, and preferred forms thereof are as described above.

A preferred form of the structural unit derived from a (meth)acrylic acid salt can also be represented by a structural unit derived from at least one selected from the group consisting of lithium acrylate, sodium acrylate, potassium acrylate, and ammonium acrylate. More preferred is at least one selected from lithium acrylate and sodium acrylate.

When the structural unit derived from a (meth)acrylic acid salt is a structural unit derived from any of the above-mentioned monomers, advantageous effects are exhibited in that the amount of the impurities can be reduced more sufficiently and that impairment of battery performance due to impurities can be prevented or reduced more sufficiently.

In a preferred embodiment of the present invention, the N-vinyl lactam copolymer of the present disclosure contains the structural unit (A2) derived from a sulfonic acid group-containing monomer salt.

The structural unit (A2) derived from a sulfonic acid group-containing monomer salt is preferably a structural unit derived from at least one selected from the group consisting of sodium, lithium, potassium, and ammonium 2-acrylamido-2-methyl-1-propanesulfonates, sodium, lithium, potassium, and ammonium 2-hydroxy-3-allyloxypropanesulfonates, sodium, lithium, potassium, and ammonium 2-sulfoethylmethacrylates, sodium, lithium, potassium, and ammonium vinylsulfonates, and sodium, lithium, potassium, and ammonium p-styrenesulfonates. Structural units derived from sodium, lithium, potassium, and ammonium 2-acrylamido-2-methyl-1-propanesulfonates are more preferred.

The structural unit (B) derived from an N-vinyl lactam monomer is not limited as long as a structural unit derived from an N-vinyl lactam monomer is incorporated as the structural unit (B) in the N-vinyl lactam copolymer of the present disclosure by polymerization of the N-vinyl lactam monomer.

In other words, the N-vinyl lactam monomer is a precursor of the structural unit derived from an N-vinyl lactam monomer.

The N-vinyl lactam monomer is a monomer having a cyclic lactam ring, and examples thereof include N-vinyl-2-pyrrolidone, N-vinyl caprolactam, N-vinyl-4-butylpyrrolidone, N-vinyl-4-propylpyrrolidone, N-vinyl-4-ethylpyrrolidone, N-vinyl-4-methylpyrrolidone, N-vinyl-4-methyl-5-ethylpyrrolidone, N-vinyl-4-methyl-5-propylpyrrolidone, N-vinyl-5-methyl-5-ethylpyrrolidone, N-vinyl-5-propylpyrrolidone, N-vinyl-5-butylpyrrolidone, N-vinyl-4-methylcaprolactam, N-vinyl-6-methylcaprolactam, N-vinyl-6-propylcaprolactam, and N-vinyl-7-butylcaprolactam. Of these, N-vinyl-2-pyrrolidone and/or N-vinylcaprolactam are/is suitable because they can have good polymerizability, give polymers having good color tone stability at high temperatures, and have good solubility in solvents. One or two or more of the N-vinyl lactam monomers may be used.

The N-vinyl lactam copolymer of the present disclosure essentially contains the structural unit (A) derived from an acid group-containing monomer salt and the structural unit (B) derived from an N-vinyl lactam monomer. The amount of the structural unit (A) is 30% by mass or less based on the total amount of the structural unit (A) and the structural unit (B), the total amount being taken as 100% by mass. When the amount of the structural unit (A) is within the above-mentioned range, the copolymer can be prevented from dissolving in an electrolyte solvent and can have a good ability to disperse carbon materials. The amount of the structural unit (A) is preferably 0.1% by mass or more, more preferably 1% by mass or more, still more preferably 1.5% by mass or more.

The amount of the structural unit (A) is preferably within the above-mentioned range in that the copolymer can be more sufficiently prevented from dissolving in an electrolyte solvent and have an improved ability to disperse carbon materials.

The amount of the structural unit (A) is preferably 25% by mass or less, more preferably 20% by mass or less, still more preferably 15% by mass or less.

The amount of the structural unit (A) is preferably 0.1 to 30% by mass, more preferably 1 to 25% by mass, still more preferably 1.5 to 20% by mass, particularly preferably 2 to 15% by mass.

In an embodiment, the amount of the structural unit (A) may be 12% by mass or less, less than 10% by mass, or 5% by mass or less.

The amount of the structural unit (A) is preferably within the above-mentioned range in that the copolymer can have good solubility in N-methyl-2-pyrrolidone.

When the N-vinyl lactam copolymer of the present disclosure contains the structural unit (A1), the amount of the structural unit (A1) is preferably 0.1 to 15% by mass based on the total amount, which is 100% by mass, of the structural unit (A) and the structural unit (B). The amount is more preferably 1 to 13% by mass, still more preferably 1.5 to 10% by mass.

When the N-vinyl lactam copolymer of the present disclosure contains the structural unit (A2), the amount of the structural unit (A2) is preferably 5 to 30% by mass based on the total amount, which is 100% by mass, of the structural unit (A) and the structural unit (B). The amount is more preferably 8 to 25% by mass, still more preferably 10 to 22% by mass.

The amount of the structural unit (A) derived from an acid group-containing monomer salt is 30% by mass or less based on the total amount of the structural unit (A) and the structural unit (B), the total amount being taken as 100% by mass. Preferably, the total amount of the structural unit (A) and a structural unit derived from an acid-type acid group-containing monomer is 30% by mass or less.

The total amount of the structural unit (A) and the structural unit derived from an acid-type acid group-containing monomer is preferably 0.1% by mass or more, more preferably 1% by mass or more, still more preferably 1.5% by mass or more.

Further, the total amount of the structural unit (A) and the structural unit derived from an acid-type acid group-containing monomer is more preferably 25% by mass or less, still more preferably 20% by mass or less, particularly preferably 15% by mass or less.

The total amount of the structural unit (A) and the structural unit derived from an acid-type acid group-containing monomer is preferably 0.1 to 30% by mass, more preferably 1 to 25% by mass, still more preferably 1.5 to 20% by mass, particularly preferably 2 to 15% by mass.

In an embodiment, the total amount of the structural unit (A) and the structural unit derived from an acid-type acid group-containing monomer may be 12% by mass or less, less than 10% by mass, or 5% by mass or less.

The amount of the structural unit (B) in the N-vinyl lactam copolymer of the present disclosure is 70% by mass or more based on the total amount, which is 100% by mass, of the structural unit (A) and the structural unit (B). The amount is preferably 70 to 99.9% by mass, more preferably 75 to 99% by mass, still more preferably 80 to 98.5% by mass, particularly preferably 85 to 98% by mass.

The N-vinyl lactam copolymer of the present disclosure may be any copolymer essentially containing the structural unit (A) derived from an acid group-containing monomer salt and the structural unit (B) derived from an N-vinyl lactam monomer. Still, the N-vinyl lactam copolymer may further contain a structural unit (E) derived from a different monomer. Specific examples of a monomer serving as a precursor of the structural unit derived from a different monomer include acid-type carboxy group-containing monomers (not including salts of carboxy group-containing monomers) such as (meth)acrylic acid, maleic acid, fumaric acid, itaconic acid, crotonic acid, and 2-methyleneglutaric acid; hydroxy group-containing alkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and $\alpha$-hydroxymethylethyl (meth)acrylate; alkyl (meth)acrylates, which are C1-C18 alkyl esters of (meth)acrylic acid, such as methyl (meth)acrylate, ethyl (meth) acrylate, butyl (meth)acrylate, cyclohexyl (meth)acrylate, lauryl (meth)acrylate, and stearyl (meth)acrylate; alkoxyalkyl (meth)acrylates such as methoxymethyl (meth)acrylate and methoxyethyl (meth)acrylate; amino group-containing acrylates such as dimethylaminoethyl (meth)acrylate and quaternary compounds thereof; amide group-containing monomers such as (meth)acrylamide, dimethylacrylamide, and isopropylacrylamide; vinyl esters such as vinyl acetate; alkenes such as ethylene and propylene; aromatic vinyl monomers such as styrene; maleimide derivatives such as maleimide, phenylmaleimide, and cyclohexylmaleimide; nitrile group-containing vinyl monomers such as (meth)acrylonitrile; acid-type sulfonic acid group-containing monomers (not including salts of sulfonic acid group-containing monomers) such as 3-allyloxy-2-hydroxypropanesulfonic acid, 2-acrylamido-2-methylpropanesulfonic acid, styrenesulfonic acid, and vinylsulfonic acid; acid-type phosphonic acid group-containing monomers (not including salts of phosphate group-containing monomers) such as vinylphosphonic acid and (meth)allylphosphonic acid; aldehyde group-containing vinyl monomers such as (meth)acrolein; alkyl vinyl ethers such as methyl vinyl ether, ethyl vinyl ether, and butyl vinyl ether; monomers containing another functional group, such as vinyl chloride, vinylidene chloride, and allyl alcohol; and polyalkylene glycol chain-containing monomers such as monomers having a structure in which 1 to 300 mol of alkylene oxide is added to an unsaturated alcohol such as polyalkylene glycol (meth)acrylate, monoalkoxypolyalkylene glycol (meth)acrylate, vinyl alcohol, (meth)allyl alcohol, or isoprenol. One of these monomers for the different monomer may be used alone, or two or more of these may be used in combination. The term (salt) in the carboxylic acid salt, sulfonic acid salt, and phosphonic acid salt is defined as in the definition of the above salt. The same applies to preferred forms. The structural unit (E) derived from a different monomer is preferably a polyalkylene glycol chain-containing monomer in that the structural unit (E) can impart steric repulsion performance and improve the carbon material dispersion stability in a low concentration system. Also, nitrile group-containing vinyl monomers such as (meth)acrylonitrile and amino group-containing acrylates are preferred in that they can impart carbon adsorption properties and improve the carbon dispersion stability in a high concentration system.

The average number of moles of alkylene oxide added in the polyalkylene glycol chain-containing monomer is preferably, but not limited to, 1 to 100, more preferably 1 to 50, still more preferably 1 to 30, particularly preferably 1 to 20.

Examples of the alkylene oxide include oxyethylene, oxypropylene, oxybutylene, oxyisobutylene, oxy-2,3-butylene, oxystyrene, and C2-C10 oxyalkylenes. More preferred are C2-C4 alkylene oxides such as oxyethylene, oxypropylene, and oxybutylene, and still more preferred are oxyethylene and oxypropylene. The oxyalkylene group represented by AO is not limited to groups formed by an addition reaction of an alkylene oxide. When the polyalkylene glycol is an adduct of two or more types of alkylene oxides, the addition reaction may be in any form of random addition, block addition, alternating addition, or the like. The oxyalkylene groups in the polyalkylene glycol chain preferably include an oxyethylene group as an essential component. An oxyethylene group more preferably accounts for 50 mol% or more, still more preferably 90 mol% or more of the oxyalkylene groups.

When the N-vinyl lactam copolymer of the present disclosure contains the structural unit (E) derived from a different monomer, the amount of the structural unit (E) is preferably 50% by mass or less based on the total amount of the structural unit (A), the structural unit (B), and the structural unit (E), the total amount being taken as 100% by mass. The amount is more preferably 30% by mass or less, still more preferably 20% by mass or less, still further more preferably 10% by mass or less. In an embodiment, the amount of the monomer (E) is preferably 5% by mass or less, more preferably 2% by mass or less, particularly preferably 0% by mass.

In one preferred embodiment of the present disclosure, the N-vinyl lactam copolymer of the present disclosure contains a structural unit derived from a polyalkylene glycol chain-containing monomer in an amount of 0.1 to 30% by mass based on the total amount, which is 100% by mass, of the structural unit (A), the structural unit (B), and the structural unit (E). The proportion of the structural unit derived from a polyalkylene glycol chain-containing monomer is more preferably 1 to 30% by mass, still more preferably 5 to 25% by mass, particularly preferably 10 to 25% by mass.

In one preferred embodiment of the present disclosure, the N-vinyl lactam copolymer of the present disclosure contains a structural unit derived from a nitrile group-containing vinyl monomer such as (meth)acrylonitrile in an amount of 0.1 to 30% by mass based on the total amount, which is 100% by mass, of the structural unit (A), the structural unit (B), and the structural unit (E). The proportion of the structural unit derived from a nitrile group-containing vinyl monomer is more preferably 1 to 25% by mass, still more preferably 3 to 20% by mass, particularly preferably 5 to 15% by mass.

The N-vinyl lactam copolymer of the present disclosure may contain a phosphorus atom. A phosphorus atom can be introduced into the main chain of the N-vinyl lactam copolymer of the present disclosure, for example, by using a phosphorus compound such as hypophosphorous acid (salt) as a reducing agent in the production of the N-vinyl lactam copolymer of the present disclosure, as described below.

The phosphorus atom may be contained in the form of a phosphorus atom-containing structural unit in the N-vinyl lactam copolymer. When the N-vinyl lactam copolymer contains a phosphorus atom-containing structural unit in the main chain, it can be prevented from discoloration (yellowing) when heated. Here, examples of the phosphorus atom-containing structural unit in the main chain include a hypophosphorous acid (salt) group, which refers to a hypophosphorous acid group or a hypophosphite group, and a phosphorous acid (salt) group, which refers to a phosphorous acid group or a phosphite group. The structural unit is preferably at least one selected from the group consisting of these. More specific examples include a phosphonic acid (salt) group and a phosphinic acid (salt) group. Of these, a phosphinic acid (salt) group is preferred. In other words, the N-vinyl lactam copolymer of the present disclosure may contain a phosphinic acid (salt) group in the main chain.

Examples of the salts include metal salts, ammonium salts, and organic amine salts, with metal salts being preferred. Examples of the metal salts include alkali metal salts such as lithium salts, sodium salts, and potassium salts; alkaline earth metal salts such as calcium salts and magnesium salts; and transition metal salts, with alkali metal salts being preferred.

When the phosphorus atom-containing structural unit is a structural unit containing a hypophosphorous acid group, a phosphorous acid group, or a group of a metal salt thereof, a hypophosphorous acid (salt) group and/or a phosphorous acid (salt) group may be formed in the main chain of the polymer and then converted into a desired acid or metal salt by adding an acid or base. Alternatively, they may be converted by treatment with ion exchange resins or the like.

In the N-vinyl lactam copolymer of the present disclosure containing a phosphorus atom-containing structural unit in the main chain, the proportion of the phosphorus atom-containing structural unit in the main chain is preferably 0.01% by mass or more, more preferably 0.05% by mass or more, still more preferably 0.1% by mass or more, based on 100% by mass of the total mass of the N-vinyl lactam copolymer of the present disclosure. The proportion is preferably 10% by mass or less, more preferably 7% by mass or less, still more preferably 6% by mass or less. When calculation of the percentage by mass of the phosphorus atom-containing structural unit in the main chain based on the total mass of the N-vinyl lactam copolymer of the present disclosure corresponds to the above-mentioned case, the calculation is performed in terms of acid or amine conversion. The amount of the phosphorus atom or the phosphorus atom-containing structural unit introduced into the main chain of the N-vinyl lactam copolymer of the present disclosure can be measured by, for example, $^{31}$P-NMR analysis.

The N-vinyl lactam copolymer of the present disclosure may contain at its end a functional group such as an aldehyde group, a carboxy group, a hydroxy group, or an amino group.

When the N-vinyl lactam copolymer of the present disclosure contains a structural unit derived from vinylpyrrolidone at its end, it is represented by the following formula (2):

[Chem. 2]

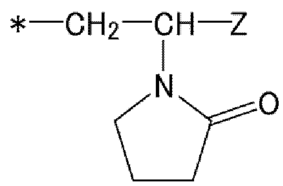

(2)

wherein Z represents a group containing an aldehyde group, a carboxy group, a hydroxy group, or an amino group; and the asterisk represents an atom in another structural unit to which the structural unit derived from vinylpyrrolidone is bonded.

The structure represented by the formula (2) can be introduced into the copolymer, for example, by using hydrogen peroxide as a polymerization initiator and a base such as ammonia as a pH adjuster in the production of the N-vinyl lactam copolymer of the present disclosure, as described below.

A phosphorus atom can be, for example, introduced into the copolymer by using a phosphorus compound such as hypophosphorous acid (salt) as a reducing agent in the production of the N-vinyl lactam copolymer of the present disclosure, as described below. When a phosphorus compound is not easily available, the N-vinyl lactam copolymer of the present disclosure preferably has a structure represented by the formula (2).

The N-vinyl lactam copolymer of the present disclosure may be any copolymer having a weight average molecular weight of 1,000 to 100,000. The weight average molecular weight is preferably 3,000 to 90,000, more preferably 5,000 to 80,000, still more preferably 7,000 to 70,000, particularly preferably 8,000 to 60,000, most preferably 10,000 to 50,000.

The weight average molecular weight of the N-vinyl lactam copolymer of the present disclosure is preferably within the above-mentioned range in that the copolymer can have an excellent ability to disperse carbon materials and prevent or reduce an increase in viscosity of the carbon material dispersion.

The weight average molecular weight of the lactam group-containing copolymer of the present disclosure is a value determined by the method described in the EXAMPLES below.

The N-vinyl lactam copolymer of the present disclosure has a K value of 12 to 60 or less as measured by the Fikentscher method. The K value is preferably 55 or less, more preferably 50 or less. The K value is preferably within the above-mentioned range in that an increase in viscosity of the carbon material dispersion can be prevented or reduced. The N-vinyl lactam copolymer of the present disclosure preferably has a K value of 20 or more as determined by the Fikentscher method. The K value is more preferably 23 or more, still more preferably 25 or more. The copolymer preferably has a K value within the above-mentioned range in that it can have an excellent ability to disperse carbon materials.

The K value of the lactam group-containing copolymer of the present disclosure determined by the Fikentscher method is a value measured by the method described in the EXAMPLES below.

The N-vinyl lactam copolymer of the present disclosure preferably has a solubility in N-methyl-2-pyrrolidone of 1% by mass or higher. The phrase "has a solubility in N-methyl-2-pyrrolidone of 1% by mass or higher" means that 1 g or more of the N-vinyl lactam copolymer of the present disclosure dissolves in 100 g of N-methyl-2-pyrrolidone at 25°C and atmospheric pressure.

The solubility is preferably 1.2% by mass or higher, more preferably 1.5% by mass or higher, still more preferably 2% by mass or higher.

The solubility of the N-vinyl lactam copolymer of the present disclosure in N-methyl-2-pyrrolidone is preferably within the above-mentioned range in that the copolymer can be applied as a carbon material dispersant in N-methyl-2-pyrrolidone and can be used, for example, as a carbon material dispersant in a battery positive electrode paste.

The N-vinyl lactam copolymer of the present disclosure preferably has a solubility in water of 1% by mass or higher. The phrase "solubility in water of 1% by mass or higher" means that 1 g or more of the N-vinyl lactam copolymer of the present disclosure dissolves in 100 g of water at 25°C and atmospheric pressure.

The solubility is more preferably 3% by mass or higher, still more preferably 5% by mass or higher, particularly preferably 10% by mass or higher.

The solubility in water of the N-vinyl lactam copolymer of the present disclosure is preferably within the above-mentioned range in that the copolymer can be applied as a carbon material dispersant in water and can be used, for example, as a carbon material dispersant in a battery negative electrode paste.

The N-vinyl lactam copolymer of the present disclosure preferably has a solubility in an electrolyte solvent of 1% by mass or higher. The phrase "solubility in an electrolyte solvent of 1% by mass or lower" means that only 1 g or less of the N-vinyl lactam copolymer of the present disclosure dissolves in 100 g of an electrolyte solvent at 25°C and atmospheric pressure.

The solubility is more preferably 0.5% by mass or lower, still more preferably 0.09% by mass or lower, still further more preferably 0.07% by mass or lower, even more preferably 0.05% by mass or lower, particularly preferably 0.02% by mass or lower.

When a positive electrode or a negative electrode is produced using the N-vinyl lactam copolymer of the present disclosure as a battery material and is incorporated into a nonaqueous electrolyte solution cell, the N-vinyl lactam copolymer preferably less leaches and dissolves in the nonaqueous electrolyte solution.

The non-aqueous electrolyte solution contains an electrolyte solvent. The electrolyte solvent may be any solvent capable of dissolving and dispersing electrolyte salts such as various Li salts. The electrolyte solvent may be any solvent commonly used in batteries.

The non-aqueous electrolyte solution is preferably a solvent that has a high dielectric constant, highly dissolves the electrolyte salts, has a boiling point of 60°C or higher, and has a wide electrochemical stability range. The non-aqueous electrolyte solution is more preferably a low water content organic solvent. Examples of the organic solvent include ether solvents such as ethylene glycol dimethyl ether, ethylene glycol diethyl ether, tetrahydrofuran, 2-methyltetrahydrofuran, 2,6-dimethyltetrahydrofuran, tetrahydropyran, crown ether, triethylene glycol dimethyl ether, tetraethylene glycol dimethyl ether, 1,4-dioxane, and 1,3-dioxolane; chain carbonic acid ester (carbonate) solvents such as dimethyl carbonate, ethyl methyl carbonate, diethyl carbonate, diphenyl carbonate, and methyl phenyl carbonate; saturated cyclic carbonic acid ester (carbonate) solvents such as ethylene carbonate, propylene carbonate, 2,3-dimethyl ethylene carbonate, 1,2-butylene carbonate, and erythritan carbonate; cyclic carbonic acid ester (carbonate) solvents having an unsaturated bond such as vinylene carbonate, methyl vinylene carbonate, ethyl vinylene carbonate, 2-vinyl ethylene carbonate, and phenyl ethylene carbonate; fluorine-containing cyclic carbonate ester solvents such as fluoroethylene carbonate, 4,5-difluoroethylene carbonate, and trifluoropropylene carbonate; aromatic carboxylic acid ester solvents such as methyl benzoate and ethyl benzoate; lactone solvents such as γ-butyrolactone, γ-valerolactone, and δ-valerolactone; phosphate solvents such as trimethyl phosphate, ethyl dimethyl phosphate, diethyl methyl phosphate, and triethyl phosphate; nitrile solvents such as acetonitrile, propionitrile, methoxypropionitrile, glutaronitrile, adiponitrile, 2-methylglutaronitrile, valeronitrile, butyronitrile, and isobutyronitrile; sulfur compound solvents such as dimethyl sulfone, ethyl methyl sulfone, diethyl sulfone, sulfolane, 3-methyl sulfolane, and 2,4-dimethyl sulfolane; aromatic nitrile solvents such as benzonitrile and tolunitrile; nitromethane, 1,3-dimethyl-2-imidazolidinone, 1,3-dimethyl-3,4,5,6-tetrahydro-2(1H)-pyrimidinone, and 3-methyl-2-oxazolidinone. One of these solvents may be used alone, or two or more of these may be used in combination.

Of the electrolyte solvents, carbonate solvents such as chain carbonate ester solvents and cyclic carbonate ester solvents, lactone solvents, and ether solvents are preferred, with dimethyl carbonate, ethyl methyl carbonate, diethyl carbonate, ethylene carbonate, propylene carbonate, γ-butyrolactone, γ-valerolactone, and the like being more preferred, and with carbonate solvents such as dimethyl carbonate, ethyl methyl carbonate, diethyl carbonate, ethylene carbonate, and propylene carbonate being still more preferred.

The N-vinyl lactam copolymer of the present disclosure preferably has a solubility in a carbonate electrolyte solvent of 1% by mass or lower.

The solubility is more preferably 0.5% by mass or lower, still more preferably 0.09% by mass or lower, still further more preferably 0.07% by mass or lower, particularly preferably 0.05% by mass or lower, most preferably 0.02% by mass or lower.

The N-vinyl lactam copolymer of the present disclosure preferably has a low solubility in a solvent mixture of ethylene carbonate and ethyl methyl carbonate among the carbonate electrolyte solvents. The solubility in a solvent mixture of ethylene carbonate and ethyl methyl carbonate (ethylene carbonate/ethyl methyl carbonate = 3/7 (mass ratio)) is preferably 0.09% by mass or lower.

The solubility is more preferably 0.07% by mass or lower, still more preferably 0.05% by mass or lower, particularly preferably 0.02% by mass or lower.

The solubility of the N-vinyl lactam copolymer of the present disclosure in a solvent mixture of ethylene carbonate and ethyl methyl carbonate (ethylene carbonate/ethyl methyl carbonate = 3/7 (mass ratio)) is preferably within the above-mentioned range in that the N-vinyl lactam copolymer of the present disclosure can be prevented from leaching from the electrode and dissolving in the electrolyte solvent, so that an increase in the viscosity of the electrolyte solvent and impairment of battery performance can be sufficiently prevented.

Composition

The composition of the present disclosure may be any composition containing: an N-vinyl lactam copolymer containing a structural unit (A) derived from an acid group-containing monomer salt and a structural unit (B) derived from an N-vinyl lactam monomer; and a carbon material.

The preferred embodiments of the N-vinyl lactam copolymer in the composition of the present disclosure are as described above.

The carbon material in the present disclosure is conductive carbon that is mainly used in the positive electrode or negative electrode of a battery. Specific examples include carbon black (Ketjen black, acetylene black, etc.), graphite, carbon nanotubes (e.g., single-walled carbon nanotubes, multi-walled carbon nanotubes), carbon fibers (e.g., vapor-grown carbon fibers), and metal powder materials.

<Carbon nanotube>

Examples of carbon nanotubes (hereinafter referred to as CNTs) among the carbon materials include carbon nanotube materials, carbon nanohorn materials, and nanographene materials. A nanocarbon material is a nano-sized substance consisting of a single layer (graphene sheet) of a six-membered ring graphite structure formed by covalently bonded carbon atoms. Carbon nanotube materials are a kind of a nanocarbon substance in which a graphene sheet is rolled into a cylindrical shape. There are two types of carbon nanotube materials: single-walled carbon nanotubes (SWNTs), which consist of one layer, and multi-walled carbon nanotubes (MWNTs), which have a structure in which carbon nanotubes are arranged concentrically. The shape, size, and production method thereof are not limited, and a known shape, size, and production method may be used. These may be used in combination.

The length of the carbon nanotube is not limited. From the viewpoint of electrical conductivity, the length is preferably 0.5 μm or more, more preferably 1 μm or more, and from the viewpoint of dispersibility, it is preferably 30 μm or less.

To achieve a high concentration of the effective CNT, the amount of the impurities in the CNT is preferably 40% by mass or less, more preferably 30% by mass or less, still more preferably 20% by mass or less, particularly preferably 10% by mass or less, most preferably substantially 0% by mass.

The carbon material in the composition of the present disclosure preferably includes at least one selected from carbon black, carbon nanofibers, and carbon nanotubes.

The carbon material in the composition of the present disclosure is preferably any of the carbon materials described above in that the composition does not adversely affect battery performance and can further improve the battery performance.

<Solvent>

The composition of the present disclosure may contain, as necessary, a solvent capable of dissolving the N-vinyl lactam copolymer of the present disclosure and further capable of dispersing the carbon material.

The solvent may be water, a water-soluble solvent, an organic solvent, or a solvent mixture thereof. Examples of the solvent include water, an acidic aqueous solution, an alkaline aqueous solution, an alcohol, an ether, petroleum ether, glycol ether, cellosolve, benzene, ethyl acetate, chloroform, ketone, acetone, toluene, and N-methyl-2-pyrrolidone. Of these, N-methyl-2-pyrrolidone and/or water are/is preferred because they can easily dissolve the N-vinyl lactam copolymer of the present disclosure and other components such as binder components, and improve the dispersibility of the carbon material.

The alcohols are preferably monohydric alcohols, more preferably C1-C5 monohydric alcohols, still more preferably C2-C4 monohydric alcohols, and may be either linear or branched. Examples of the alcohols include methanol, ethanol, isopropyl alcohol, and butanol, with ethanol and isopropyl alcohol being more preferred, and isopropyl alcohol being still more preferred. Considering ease of handling and environmental impact, use of water alone is particularly preferred. To improve the wettability of the nanocarbon material (carbon nanotube) during dispersion, to make it easier to disintegrate the nanocarbon material aggregate, and to help the nanocarbon material aggregate disperse, a mixture of a hydrophilic organic solvent and water is preferably used. The hydrophilic organic solvent is a solvent that is compatible with water when mixed therewith. Specific examples include methanol, ethanol, propanol, isopropanol, butanol, pentanol, ethanediol, propanediol, butanediol, glycerol, trimethylolpropane, pentaerythritol, diethylene glycol, dipropylene glycol, triethylene glycol, ethylene glycol monobutyl ether, propylene glycol monomethyl ether, propylene glycol monopropyl ether, diethylene glycol monobutyl ether, diethylene glycol dimethyl ether, acetone, tetrahydrofuran, N-methyl-2-pyrrolidone, N,N-dimethylformamide, and dimethyl sulfoxide. These hydrophilic organic solvents may be used alone or in combination.

The amount of the solvent in the composition of the present disclosure is not limited and may be appropriately set depending on the purpose and application. The composition of the present disclosure preferably contains the solvent in an amount of 1 to 99.9% by mass based on the total amount of the composition of the present disclosure, the total amount being taken as 100% by mass. The amount is more preferably 10 to 99.5% by mass, still more preferably 30 to 99% by mass, particularly preferably 50 to 98.5% by mass.

From the viewpoint of an ability to disperse the carbon material, the amount of the N-vinyl lactam copolymer of the present disclosure in the composition of the present disclosure based on 100% by mass of the composition of the present disclosure is preferably 0.1% by mass or more, more preferably 0.2% by mass or more, still more preferably 0.5% by mass or more. From the viewpoint of the ability to disperse, it is preferably 50% by mass or less, more preferably 40% by mass or less, still more preferably 30% by mass or less.

<Method for producing carbon material dispersion>

The composition of the present disclosure may also be in the form of a carbon material dispersion. For example, the dispersion can be produced by combining the N-vinyl lactam copolymer of the present disclosure, the carbon material, and the solvent by a known method. Thus, the present disclosure encompasses a method for producing a carbon material dispersion as the composition, the method including a dispersion step of dispersing the carbon material in a liquid medium by mixing the N-vinyl lactam copolymer of the present disclosure, the carbon material, and the solvent. The method for producing a carbon material dispersion of the present disclosure can produce a carbon material dispersion in which a carbon material is highly dispersed. The carbon material and solvent used in the method for producing a dispersion of the present disclosure may be the same as the components in the composition of the present disclosure described above.

From the viewpoint of ease of handling, the amount of the N-vinyl lactam copolymer of the present disclosure based on 100% by mass of the carbon material dispersion is preferably 0.1% by mass or more and 20% by mass or less, more preferably 0.1% by mass or more and 10% by mass or less, still more preferably 0.3% by mass or more and 5% by mass or less. The amount of the N-vinyl lactam copolymer of the present disclosure in the carbon material dispersion can be determined, for example, from the amounts of raw materials charged, or can be determined by separating the carbon materials by filtration and measuring the amount of solids in the solution.

In the production of the dispersion, the carbon material dispersion can be produced using a common mixing and dispersing machine for use in paint production. Examples of the mixing and dispersing machine include an ultrasonic

homogenizer, a vibration mill, a jet mill, a ball mill, a bead mill, a sand mill, a roll mill, a homogenizer, a high-pressure homogenizer, an ultrasonic device, an attritor, a dissolver, and a paint shaker. At least one selected therefrom may be used. In the dispersion step, from the viewpoint of improving dispersibility, the dispersion is preferably performed by ultrasonic dispersion or bead mill dispersion or using an emulsification apparatus or the like. The carbon material used for dispersion may be in a dry state or may contain a liquid medium. In the dispersion step, preferred amounts of the components may be based on the preferred proportions of the components in the composition of the present disclosure described above.

<Method of checking dispersion state>

The dispersibility of the carbon material in the carbon material dispersion of the present disclosure can be checked not only by visual observation but also by a method for measuring the absorbance of the dispersion containing the carbon material using a spectrophotometer as described below. First, several sample dispersions with known very low carbon material concentrations are prepared and subjected to measurement of absorbance at a specific wavelength. Then, a calibration curve of absorbance versus concentration are prepared. Next, the carbon material, the solvent, and the N-vinyl lactam copolymer of the present disclosure are mixed, and the mixture is subjected to dispersion by a predetermined dispersion method. Then, the dispersion is subjected to centrifugal separation to sediment and separate the carbon material that cannot be dispersed. The supernatant is diluted to a concentration at which the absorbance can be measured, and the absorbance is measured. The concentration is calculated from the calibration curve. The dispersibility can be evaluated based on the concentration of the resulting dispersion and by comparing the charged amount with the concentration of the dispersion. Alternatively, the dispersion of the composition of the present disclosure after centrifugation may be allowed to stand for a long period of time, and the presence or absence of aggregate may be checked.

<Carbon nanotube-dispersed resin composition>

A resin composition other than the N-vinyl lactam copolymer of the present disclosure may be added to the carbon material dispersion of the present disclosure. Thereby, carbon material-dispersed resin compositions in various forms can be obtained. The resin composition may be a conventionally known resin composition. Specifically, the resin composition may be a resin composition containing a resin such as an acrylic resin, a styrene resin, an olefin resin, a vinyl ether resin, a vinyl alcohol resin, a polyester resin, a polyurethane resin, a polyamide resin, a polycarbonate resin, a polyimide resin, an epoxy resin, a melamine resin, a phenolic resin, or a silicone resin. The form thereof may be a resin solid or a resin solution. A mixture of multiple resins may also be used.

The carbon material-dispersed resin composition of the present disclosure can be used as paints, inks, plastics, and the like containing a carbon material dispersed therein. It is also expected to be used as a conductive material, as well as an antistatic material. Paints or inks containing a carbon material dispersed therein can be prepared, for example, as follows: another resin composition is added to the carbon material dispersion of the present invention so as to form a paint or ink composition to prepare a paint or ink; or a carbon material dispersion is added to a commercially available paint or ink. Furthermore, plastics containing a carbon material dispersed therein can be prepared by, for example, mixing the carbon material dispersion of the present disclosure with plastic in a molten state and removing the solvent, or adding the carbon material dispersion of the present disclosure to plastic in a fine powder state and removing the solvent or precipitating the carbon material.

Method for producing N-vinyl lactam copolymer

The method for producing the N-vinyl lactam copolymer of the present disclosure includes a polymerization step of polymerizing raw material monomers. The present invention also encompasses a method for producing an N-vinyl lactam copolymer including polymerizing monomer components containing an acid group-containing monomer salt and an N-vinyl lactam monomer.

<Monomer component>

As described above, the N-vinyl lactam copolymer of the present disclosure essentially contains the structural unit (A) derived from an acid group-containing monomer salt and the structural unit (B) derived from an N-vinyl lactam monomer.

A monomer corresponding to the structural unit (A) can be represented as a monomer (A). A monomer corresponding to the structural unit (B) can be represented as a monomer (B).

The monomer (A) and the monomer (B) are as described above, and the same applies to preferred forms thereof.

As described above, the N-vinyl lactam copolymer of the present disclosure essentially contains the structural unit (A) derived from an acid group-containing monomer salt and the structural unit (B) derived from an N-vinyl lactam monomer, and may further contain a structural unit (E) derived from a different monomer. A monomer corresponding to the structural unit derived from a different monomer can be represented as a monomer (E). The monomer (E) is as described

above.

The monomers used in the polymerization step for the N-vinyl lactam copolymer of the present disclosure essentially include the monomer (A) and the monomer (B). The amount (feed amount) of the monomer (A) is 30% by mass or less based on the total amount of the monomer (A) and the monomer (B), the total amount being taken as 100% by mass. The amount of the monomer (A) is preferably within the above-mentioned range in that the copolymer can have a good ability to disperse carbon materials and have good solubility in N-methyl-2-pyrrolidone. The amount of the monomer (A) used is preferably 25% by mass or less, more preferably 20% by mass or less, still more preferably 15% by mass or less.

The amount of the monomer (A) based on the total amount, which is 100% by mass, of the monomer (A) and the monomer (B) is preferably 0.1% by mass or more, more preferably 1% by mass or more, still more preferably 1.5% by mass or more.

The proportion of the monomer (A) used is preferably within the above-mentioned range in that the copolymer can be prevented from dissolving in the electrolyte solvent.

In an embodiment, the amount of the monomer (A) may be 12% by mass or less, less than 10% by mass, or 5% by mass or less.

The amount of the monomer (A) is preferably within the above-mentioned range in that the copolymer can have good solubility in N-methyl-2-pyrrolidone.

The monomers used in the polymerization step for the N-vinyl lactam copolymer of the present disclosure may include a different monomer (E) other than the monomer (A) and the monomer (B).

The amount of the different monomer (E), when used, is preferably 50% by mass or less based on the total amount of the monomer (A), the monomer (B), and the different monomer (E), the total amount being taken as 100% by mass. It is more preferably 30% by mass or less, still more preferably 20% by mass or less, further more preferably 10% by mass or less. In an embodiment, the amount of the monomer (E) is preferably 5% by mass or less, more preferably 2% by mass or less, particularly preferably 0% by mass.

When the proportion of a different monomer or the like containing a salt of an amino group in all monomer components is calculated, the calculation is performed such that the salt of an amino group is taken as the corresponding amino group (in terms of amine conversion). When the proportion of the structure or the like derived from a different monomer based on the structural units derived from all monomer components is calculated, similarly, the mass of the structural unit derived from a different monomer based on the total mass of the N-vinyl lactam copolymer of the present disclosure is calculated in terms of amine conversion when this case corresponds to the above-mentioned case.

<Radical polymerization initiator>

The monomers are preferably polymerized using a radical polymerization initiator. In the production method of the present disclosure, particularly in the polymerization step, an azo polymerization initiator, hydrogen peroxide, and/or an organic peroxide are/is preferably used as a radical polymerization initiator. The azo polymerization initiator refers to a compound that has an azo bond and generates radicals by heating or the like.

Non-limiting examples of an azo polymerization initiator usable in the present disclosure include 2,2'-azobis-2-amidinopropane dihydrochloride, 2,2'-bis(2-imidazolin-2-yl)[2,2'-azobispropane] dihydrochloride, 2,2'-bis(2-imidazolin-2-yl) [2,2'-azobispropane] disulfate, 2,2'-azobis[2-(2-imidazolin-2-yl)propane] disulfate dihydrate, 2,2'-azobis-(propane-2-carbamidine) dihydrochloride, 2,2'-azobis[N-(2-carboxyethyl)-2-methylpropionamidine], 2,2'-azobis{2-[1-(2-hydroxyethyl)-2-imidazolin-2-yl]propane} dihydrochloride, 2,2'-azobis[2-(2-imidazolin-2-yl)propane], 2,2'-azobis(1-imino-1-pyrrolidino-2-methylpropane) dihydrochloride, 2,2'-azobis{2-methyl-N-[1,1-bis(hydroxymethyl)-2-hydroxyethyl] propionamide}, 2,2'-azobis[N-(2-hydroxyethyl)-2-methylpropanamide], 4,4'-azobis-4-cyanovaleric acid, azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), and dimethyl 2,2'-azobis(2-methylpropionate). Of these, those having a 10-hour half-life temperature of 30°C or higher and 90°C or lower are preferred, and those having a 10-hour half-life temperature of 40°C or higher and 70°C or lower are more preferred because they can tend to enable efficient production of the N-vinyl lactam polymer and can also tend to achieve a good color tone at high temperatures of the resulting polymer. Specifically, 2,2'-azobis-2-amidinopropane dihydrochloride, 2,2'-bis(2-imidazolin-2-yl)[2,2'-azobispropane] dihydrochloride, 2,2'-bis(2-imidazolin-2-yl)[2,2'-azobispropane] disulfate, 2,2'-azobis[2-(2-imidazolin-2-yl)propane] disulfate dihydrate, 2,2'-azobis-(propane-2-carbamidine) dihydrochloride, 2,2'-azobis[2-(2-imidazolin-2-yl)propane], azobisisobutyronitrile, 2,2'-azobis(2,4-dimethylvaleronitrile), 2,2'-azobis(2-methylbutyronitrile), and dimethyl 2,2'-azobis(2-methylpropionate) are preferred, with 2,2'-azobis-2-amidinopropane dihydrochloride, 2,2'-bis(2-imidazolin-2-yl)[2,2'-azobispropane]dihydrochloride, and 2,2'-azobis [2-(2-imidazolin-2-yl)propane] disulfate dihydrate being more preferred and 2,2'-azobis-2-amidinopropane dihydrochloride being most preferred. An azo polymerization initiator having a carboxy group (e.g., 2,2'-azobis[N-(2-carboxyethyl)-2-methylpropionamidine]) may adversely cause discoloration. Thus, when such an initiator is used as desired, it is preferably used as little as possible, more preferably not used.

Examples of an organic peroxide usable in the present disclosure include alkyl hydroperoxides such as tertiary

butyl hydroperoxide, ditertiary butyl peroxide, cumene hydroperoxide, tertiary hexyl hydroperoxide, and p-menthane hydroperoxide; tertiary butyl peroxyacetate, disuccinoyl peroxide, and peracetic acid. Of these organic peroxides, those having a 10-hour half-life temperature of 30°C or higher and 180°C or lower are preferred, and those having a 10-hour half-life temperature of 40°C or higher and 170°C or lower are more preferred.

The radical polymerization initiator used in the production method of the present disclosure, particularly in the polymerization step, preferably essentially includes one or two or more selected from the azo polymerization initiators and the organic peroxides. The initiator may be used in combination with a different radical polymerization initiator. Examples of such an initiator include persulfates such as sodium persulfate, potassium persulfate, and ammonium persulfate; and hydrogen peroxide.

The radical polymerization initiator used in the present invention is preferably any of the azo polymerization initiators and/or hydrogen peroxide.

Hydrogen peroxide is preferred in that the molecular weight can be easily reduced without using a chain transfer agent such as a phosphorus compound. By reducing the molecular weight of the N-vinyl lactam copolymer, the copolymer is expected to have an improved dispersing ability.

The amount of the radical polymerization initiator used (when a plurality of radical polymerization initiators are used, the total amount of these) is preferably 0.1% by mass to 5% by mass based on all monomer components, unless otherwise specified. The amount is more preferably 0.5% by mass to 4% by mass, still more preferably 1% by mass to 3% by mass.

The amount of the radical polymerization initiator used is preferably within the above-mentioned range in that the molecular weight of the polymer tends to be easily adjusted, the amount of the impurities can be reduced, and discoloration during heating tends to be more prevented or reduced.

The polymerization initiator may be added to a reaction system (polymerization vessel) by any method. Preferably, the polymerization initiator is added continuously or stepwise. When the polymerization initiator is added continuously, the dropping rate may be varied.

The polymerization initiator may be added as it is without being dissolved in a solvent. Preferably, the polymerization initiator is dissolved in any of the below-described solvents before being added to the reaction system (polymerization vessel).

When hydrogen peroxide is used as the radical polymerization initiator in the production method, the amount thereof used is preferably, but not limited to, 1.0 to 4.0% by mass based on 100% by mass of all monomers used. Thereby, the polymerization reaction rate is allowed to fall within a more suitable range. Furthermore, use of hydrogen peroxide in an amount of 1.0% by mass or more based on 100% by mass of all monomers used allows the resulting polymer solution to have improved stability over time. Furthermore, use of hydrogen peroxide in an amount of 4.0% by mass or less can sufficiently reduce the amount of 2-pyrrolidone produced as a by-product, sufficiently achieving the performance of the polymer.

The amount of hydrogen peroxide used is preferably 1.2 to 3.9% by mass, more preferably 1.5 to 3.8% by mass, still more preferably 2.0 to 3.7% by mass.

<Reducing agent>

In the production method of the present disclosure, particularly in the polymerization step, any reducing agent may be used to adjust the molecular weight of the N-vinyl lactam copolymer of the present disclosure. Non-limiting examples of reducing agents usable include thiol compounds such as mercaptoethanol, thioglycerol, thioglycolic acid, 2-mercaptopropionic acid, 3-mercaptopropionic acid, thiomalic acid, octyl thioglycolate, octyl 3-mercaptopropionate, 2-mercaptoethanesulfonic acid, n-dodecyl mercaptan, octyl mercaptan, and butyl thioglycolate; halides such as carbon tetrachloride, methylene chloride, bromoform, and bromotrichloroethane; hydroxy group-containing compounds other than the above-mentioned alcohol compounds; phosphorous acid, phosphites, hypophosphorous acid, hypophosphites, and hydrates thereof; and lower oxides and salts thereof such as sulfurous acid, hydrogen sulfite, dithionous acid, metabisulfite, and bisulfites such as salts thereof (including compounds that dissolve in water to generate bisulfites). These salts are salts of metals such as sodium, ammonium salts, or organic amine salts. Two or more of the reducing agents may be used in combination.

The amount of salts of metals such as sodium is preferably reduced as much as possible in special industrial applications such as the production of hollow fiber membranes, and in electrical material applications such as semiconductor cleaning.

<Chain transfer agent>

The polymerization step may be performed in the presence of a phosphorus atom-containing compound. Chain transferring to the phosphorus atom-containing compound enables efficient introduction of a substituent containing a

phosphorus atom into the N-vinyl lactam copolymer of the present disclosure and efficient reduction of the molecular weight. Unless otherwise specified, examples of the phosphorus atom-containing compound and preferred embodiments thereof include hypophosphorous acid (salts), phosphorous acid (salts), phosphoric acid (salts), hypophosphite esters, phosphite esters, and phosphate esters.

From the viewpoint of high chain transfer efficiency, hypophosphorous acid (salts), phosphorous acid (salts), and hypophosphite esters are preferred, and hypophosphorous acid (salts) is more preferred. When a phosphorus atom-containing compound is used, one or two or more phosphorus atom-containing compounds may be used.

In the polymerization step, the amount of the phosphorus atom-containing compound is preferably 0.1 g or more and 5 g or less, more preferably 0.3 g or more and 1 g or less, per mole of the monomers (all monomers) used. When the phosphorus atom-containing compound is a salt, the above range is determined by mass calculation performed such that the salt of the phosphorus atom-containing compound is taken as the corresponding acid. For example, in the case of sodium hypophosphite, the mass calculation is performed such that the sodium hypophosphite is taken as the corresponding acid, hypophosphorous acid.

In the polymerization step, a chain transfer agent other than the phosphorus atom-containing compound (hereinafter also referred to as a different chain transfer agent) can be used as desired. Examples of the different chain transfer agent include thiol chain transfer agents such as mercaptoethanol and mercaptopropionic acid; halides such as carbon tetrachloride and methylene chloride; secondary alcohols such as isopropyl alcohol and glycerol; sulfurous acid (salts) such as sodium sulfite; bisulfurous acid (salts) such as sodium hydrogen sulfite; dithionous acid (salts) such as sodium dithionite; and pyrosulfurous acid (salts) such as potassium pyrosulfite. When the different chain transfer agent is used, one of these different chain transfer agents may be used alone, or two or more of these may be used in combination.

<Reducing compound>

In the production method of the present disclosure, particularly in the polymerization step, a heavy metal ion (or a heavy metal salt) may be used as a reducing compound that acts as a decomposition catalyst or the like for the polymerization initiator. In the present invention, the term "heavy metal" refers to a metal having a specific gravity of 4 $g/cm^3$ or more. The heavy metal is preferably iron and/or copper. The reducing compound may be a heavy metal salt such as a Mohr's salt ($Fe(NH_4)_2(SO_4)_2 \cdot 6H_2O$), ferrous sulfate heptahydrate, ferrous chloride, ferric chloride, copper(I) sulfate and/or its hydrates, copper(II) sulfate and/or its hydrates, or copper(II) chloride and/or its hydrates.

The amount of the heavy metal compound used is not limited and is preferably such that the amount of metal ions is 0.01 to 10 ppm by mass based on the monomer components. In other words, the amount of the heavy metal compound used based on the monomer components is preferably 0.01 to 10 ppm by mass in terms of the amount of metal ions. The amount of metal ions is more preferably 0.01 to 5 ppm by mass. This allows the decomposition rate of hydrogen peroxide to fall within a suitable range.

The amount of metal ions is preferably 0.001 to 0.35 mmol%, more preferably 0.001 to 0.21 mmol%, based on the monomer components.

When the heavy metal ions are used, the amount thereof may fall within the range of, for example, 0.1 to 10 ppm. In special industrial applications such as the production of hollow fiber membranes and in electrical material applications such as semiconductor cleaning, the heavy metal ions are preferably not used.

<Other additives>

In the production method of the present disclosure, particularly in the polymerization step, ammonia and/or an amine compound may be used for the purposes of accelerating the polymerization reaction, preventing hydrolysis of N-vinyl lactam, and the like. Ammonia and an amine compound function as a promoter in the polymerization reaction. In other words, the progress of the polymerization reaction is more accelerated when ammonia and/or an amine compound are/is contained in the reaction system than when not contained. Ammonia and an amine compound may also function as a basic pH adjuster. Here, ammonia causes the order and also causes discoloration. Thus, it is preferably used in a reduced amount. When ammonia is used, it may be used as it is as a gaseous element at room temperature, or may be used as an aqueous solution (ammonia water). The ammonia and/or amine compound may be added by any appropriate method. For example, the ammonia and/or amine compound may be charged into a reaction vessel at the early stage of the polymerization, or may be sequentially added to the reaction vessel during the polymerization.

The amine compound may be any appropriate amine compound. Specific examples include primary amines, secondary amines, and tertiary amines. One or two or more of these amines may be used.

Examples of the primary amines include monoethanolamine, allylamine, isopropylamine, diaminopropylamine, ethylamine, 2-ethylhexylamine, 3-(2-ethylhexyloxy)propylamine, 3-ethoxypropylamine, 3-(diethylamino)propylamine, 3-(dibutylamino)propylamine, tetramethylethylenediamine, t-butylamine, sec-butylamine, propylamine, 3-(methylamino)propylamine, 3-(dimethylamino)propylamine, and 3-methoxypropylamine. One of the primary amines may be used

alone or two or more of these may be used in combination.

Examples of the secondary amines include aliphatic secondary amines such as dimethylamine, diethylamine, dipropylamine, diisopropylamine, N-methylethylamine, N-methylpropylamine, N-methylisopropylamine, N-methylbutylamine, N-methylisobutylamine, N-methylcyclohexylamine, N-ethylpropylamine, N-ethylisopropylamine, N-ethylbutylamine, N-ethylisobutylamine, N-ethylcyclohexylamine, N-methylvinylamine, and N-methylallylamine; aliphatic diamines and triamines such as N-methylethylenediamine, N-ethylethylenediamine, N,N'-dimethylethylenediamine, N,N'-diethylethylenediamine, N-methyltrimethylenediamine, N-ethyltrimethylenediamine, N,N'-dimethyltrimethylenediamine, N,N'-diethyltrimethylenediamine, diethylenetriamine, and dipropylenetriamine; aromatic amines such as N-methylbenzylamine, N-ethylbenzylamine, N-methylphenethylamine, and N-ethylphenethylamine; monoalkanolamines such as N-methylethanolamine, N-ethylethanolamine, N-propylethanolamine, N-isopropylethanolamine, N-butylethanolamine, and N-isobutylethanolamine; dialkanolamines such as diethanolamine, dipropanolamine, diisopropanolamine, and dibutanolamine; and cyclic amines such as pyrrolidine, piperidine, piperazine, N-methylpiperazine, N-ethylpiperazine, morpholine, and thiomorpholine. One of the secondary amines may be used alone or two or more of these may be used in combination. Of these secondary amines, dialkanolamines and dialkylamines are preferred, dialkanolamines are more preferred, and diethanolamine is particularly preferred.

Examples of the tertiary amines include trialkanolamines such as trimethylamine, triethylamine, tripropylamine, triisopropylamine, triethanolamine, tripropanolamine, triisopropanolamine, and tributanolamine. One of the tertiary amines may be used alone or two or more of these may be used in combination. Of these tertiary amines, trialkanolamines are preferred, with triethanolamine being particularly preferred.

When the ammonia and the amine compound are used, the total amount of these is preferably 0.01 part by mass or more, more preferably 0.02 to 1 part by mass, relative to 100 parts by mass of the N-vinyl lactam. When the total amount of these falls within the above ranges, the reaction rate tends to improve, leading to the effect of preventing or reducing hydrolysis of N-vinyl lactam that accompanies a decrease in pH during the reaction and preventing or reducing discoloration.

When hydrogen peroxide is used as the polymerization initiator, ammonia is preferably used. The amount of ammonia is preferably, but not limited to, 0.1 to 3.0% by mass based on 100% by mass of all monomers used. The amount is more preferably 0.15 to 2.0% by mass, still more preferably 0.2 to 1.0% by mass.

When a copper salt as the heavy metal salt and ammonia are used, a copper ammine complex salt may be formed. Examples of the copper ammine complex salt include diammine copper salts ($[Cu(NH_3)_2]_2SO_4 \cdot H_2O$, $[Cu(NH_3)_2]Cl$, etc.) and tetraammine copper salts ($[Cu(NH_3)_4]SO_4 \cdot H_2O$, $[Cu(NH_3)_4]Cl_2$, etc.).

When a copper ammine complex salt is used as the heavy metal salt, any of the copper ammine complex salts may be added to a reactor. Preferably, a copper salt such as copper sulfate, copper chloride, copper nitrate, or copper acetate and ammonia are added to the reactor thereby forming a copper ammine complex salt.

When hydrogen peroxide and ammonia are used in the production of the N-vinyl lactam copolymer of the present invention, ammonia and hydrogen peroxide may be further added after the addition of the monomer components is completed. The amounts of ammonia and hydrogen peroxide used after the addition of the monomer components is completed are respectively preferably 0 to 0.3% by mass and 0.2 to 2.5% by mass, respectively, based on 100% by mass of all monomers used.

<Polymerization solvent>

The polymerization step is preferably performed in the presence of a solvent. Examples of the solvent include water, methyl alcohol, ethyl alcohol, isopropyl alcohol (2-propanol), n-butyl alcohol, diethylene glycol, and other alcohols. The solvent may include one or two or more selected from these. The solvent is preferably water and/or isopropyl alcohol. More preferred is water. The amount of the solvent used is preferably 40 to 1000% by mass relative to 100% by mass of the monomers.

The polymerization step is preferably performed so that the solid concentration after the completion of the polymerization (the concentration of the non-volatile components in the solution) is 10 to 80% by mass, more preferably 15 to 70% by mass, still more preferably 20 to 60% by mass, based on 100% by mass of the polymerization solution.

<Other polymerization conditions>

The temperature of polymerization is preferably 50°C or higher, more preferably 55°C to 100°C, still more preferably 60°C to 90°C. When the temperature of polymerization falls within the above range, the amount of residual monomer components tends to be small, which enhances the dispersibility provided by the polymer.

The temperature of polymerization may be 70°C or higher, 75°C to 110°C, or 80°C to 105°C.

The temperature of polymerization needs not to be kept constant during the progress of the polymerization reaction. For example, the polymerization may be started from room temperature, the temperature may be raised to a set

temperature over an appropriate temperature rise time or at an appropriate temperature rise rate, and then the set temperature may be maintained. Alternatively, the polymerization temperature may be varied (raised or lowered) over time during the progress of the polymerization reaction depending on the method of dropwise addition of the monomer components, initiator, and the like.

The pH during polymerization is preferably 5 or more, more preferably 6 or more, and is preferably 11 or less, from the viewpoint of preventing or reducing the generation of impurities or by-products.

The pressure in the reaction system may be normal pressure (atmospheric pressure), reduced pressure, or increased pressure. From the viewpoint of the molecular weight of the resulting polymer, the reaction is preferably performed under normal pressure or under increased pressure with the reaction system sealed. From the viewpoint of equipment such as a pressurizing device, a decompressing device, a pressure-resistant reaction vessel, and tubing, the reaction is preferably performed under normal pressure (atmospheric pressure). The atmosphere in the reaction system may be an air atmosphere, and is preferably an inert atmosphere. For example, the system is preferably purged with an inert gas such as nitrogen before the start of polymerization.

The polymerization time is preferably 30 minutes or more and 5 hours or less. As the polymerization time increases, the polymerization liquid tends to undergo increased discoloration. After the polymerization is completed, an aging step (a step of maintaining the polymer solution under heating and heat-retaining conditions after the polymerization) may be performed for the purpose of reducing the amount of residual monomer in the polymerization liquid. The aging time is usually one minute or longer and four hours or shorter. A polymerization initiator (booster) is preferably further added during the aging because the amount of residual monomer in the polymerization liquid can be reduced.

In the latter stage of polymerization, the timing of completing the addition of the initiator is preferably the same as or later than the timing of completing the addition of the monomers because the amount of residual monomer in the polymerization liquid can be reduced.

<Addition of organic acid>

In the present disclosure, after the polymerization reaction is completed, an organic acid or an aqueous solution thereof may be added to the reaction liquid (hereinafter also referred to as an organic acid addition step). This step is preferably performed while the reaction temperature of the polymerization reaction is maintained. Thereby, the remaining N-vinyl lactam is hydrolyzed by the acid, reducing the amount of unreacted monomer (i.e., the amount of residual monomer in the reaction liquid). For example, when N-vinyl-2-pyrrolidone is used as a monomer, it is hydrolyzed to 2-pyrrolidone by acid.

Preferred organic acids usable to reduce the amount of residual monomer include carboxylic acids having a boiling point (e.g., 100°C or higher) higher than the temperature of the reaction liquid at the time of addition of the organic acid. Specific examples thereof include formic acid, acetic acid, propionic acid, oxalic acid, malonic acid, succinic acid, aspartic acid, citric acid, glutamic acid, fumaric acid, malic acid, maleic acid, phthalic acid, trimellitic acid, and pyromellitic acid. One of these organic acids may be used alone or two or more of these may be used in combination.

The amount of the organic acid used is not limited and may be appropriately adjusted depending on the amount of N-vinyl lactam used in the polymerization reaction. For example, the amount of the organic acid used may be adjusted so that the pH of the reaction liquid after the polymerization is preferably 5 or less, more preferably 3 or more and 4 or less. Specifically, the amount of the organic acid used is preferably 100 ppm or more and 30,000 ppm or less, more preferably 500 ppm or more and 20,000 ppm or less, relative to the amount of the N-vinyl lactam used.

<Amount of residual monomer>

The method for producing the N-vinyl lactam copolymer of the present disclosure is preferred because it can reduce the amount of monomer remaining unreacted. The amount of residual monomer is preferably 200 ppm or less based on the obtained N-vinyl lactam polymer of the present disclosure. It is more preferably 100 ppm or less, still more preferably 50 ppm or less, particularly preferably 10 ppm or less. The amount of the residual monomer preferably falls within the above range in that the amount of the impurities tends to be reduced, discoloration during heating tends to be prevented or reduced, and odors tend to be reduced. A residual monomer easily dissolves in the electrolyte solvent to be likely to impair battery performance. Thus, reducing the amount of residual monomer is also preferred in that such impairment of battery performance can be sufficiently prevented.

<Amount of impurities derived from monomer>

The method for producing the N-vinyl lactam copolymer of the present disclosure is preferred because it can reduce the amount of the impurities derived from monomers. For example, when N-vinyl-2-pyrrolidone is used as a monomer, the impurity thereof is 2-pyrrolidone. The amount of the impurities derived from monomers is preferably 50,000

ppm or less based on the obtained N-vinyl lactam polymer of the present disclosure. It is more preferably 30,000 ppm or less, still more preferably 20,000 ppm or less, particularly preferably 15,000 ppm or less. The amount of the impurities derived from monomers preferably falls within the above-mentioned range in that discoloration during heating tends to be prevented or reduced and that odors also tend to be reduced. Impurities easily dissolve in the electrolyte solvent to be likely to impair battery performance. Thus, reducing the amount of the impurities is also preferred in that such impairment of battery performance can be sufficiently prevented.

In an embodiment, the amount of the impurities derived from monomers may be 5000 ppm or less, 3000 ppm or less, 2000 ppm or less, or 1500 ppm or less.

<Drying step>

In order to obtain a N-vinyl lactam copolymer from the N-vinyl lactam copolymer solution obtained in the polymerization step, a drying step may be performed. The drying step includes powdering, etc., and also includes pulverization. The drying and pulverization may be performed by commonly known methods such as spray drying, freeze drying, fluidized bed drying, drum drying, and belt drying. Thereby, a powder can be obtained. In the case of drying by heating under normal pressure, the drying temperature is preferably about 100°C to 250°C and the drying time is preferably about 0.2 to 180 minutes. In the case of drying under reduced pressure, the drying temperature may be appropriately selected depending on the degree of pressure reduction. The N-vinyl lactam copolymer solution having a K value of 60 or less is preferably dried by spray drying.

<Other steps>

The production method of the present disclosure essentially includes the polymerization step, and may optionally include the organic acid addition step, drying step, and the like. The production method may further optionally include other steps. For example, the production method may include steps such as purification, desalination, concentration, dilution, and pH adjustment. Treatment of the reaction liquid (polymerization liquid) with a cation exchange resin can provide a N-vinyl lactam copolymer solution having an improved color tone. The treatment with a cation exchange resin can be performed during (in parallel with) or after the polymerization. The treatment with a cation exchange resin during the polymerization reaction may be performed by any suitable method. Preferably, this is performed by adding a cation exchange resin to the reaction vessel in which the polymerization reaction of the monomer components is performed. Specifically, for example, a cation exchange resin is added to the reaction vessel in which the polymerization reaction is performed and suspended finely, and then the suspension is filtered. The time for the treatment with a cation exchange resin may be any appropriate time. The time is preferably from 1 minute to 24 hours, more preferably from 3 minutes to 12 hours, still more preferably from 5 minutes to 2 hours. The production method of the present disclosure may include none of the above other steps, or may include one or two or more of them.

Applications of N-vinyl lactam copolymer

The N-vinyl lactam copolymer of the present disclosure and/or the composition of the present invention can be used in a variety of applications, including, but not limited to, a production aid for hollow fiber membranes, a cleaning agent for semiconductors, an additive for adhesives and pressure sensitive adhesives, an aid for manufacturing electronic components, a detergent additive, an additive for cosmetics, a thickener, an ink additive, a pigment dispersant, a dispersant for positive and negative electrode materials for batteries, a dispersant for inorganic particles, an additive for paint compositions, a surface treatment agent, a resin modifier, a binder for inorganic substances, a ceramic binder, an additive for inorganic compositions, a fiber treatment agent, and an additive for functional fibers.

EXAMPLES

The present invention is described in more detail below with reference to examples, but the present invention is not limited to these examples. It should be noted that the terms "part(s)" and "%" refer to "part(s) by mass" and "% by mass", respectively, unless otherwise stated.

Evaluations of the polymer were performed by the following methods.

<Measurement of solid content of polymer>

The polymer in an amount of 1 g (mass W2 (g)) was weighed in a weighing tin (mass W1 (g)) with a bottom diameter of about 5 cm, and allowed to stand for drying in a constant temperature dryer at 150°C for one hour. The sum of the masses of the weighing tin and the polymer after drying (mass W3 (g)) was measured, and the solid content was

determined by the following formula.

Solid content (% by mass) = ((W3 (g) - W1 (g))/W2 (g)) × 100

<Measurement of K value of polymer>

Deionized water was added to the polymer for dilution to prepare a solution having a concentration of 1% by mass in terms of solid content. The viscosity of the solution was measured at 25 ± 0.2°C using an Ubbelohde viscometer. The time during which the solution passed between two calibrated marks was measured. The measurement was performed several times and the resulting values were averaged. To determine the relative viscosity, the same measurement was also performed on deionized water. The two resulting values of the pass-through times were corrected based on the Hagenbach-Couette correction.

[Math. 1]

$$K\ value = \frac{\sqrt{300C\log Z + (C + 1.5C\log Z)^2} + 1.5C\log Z - C}{0.15C + 0.003C^2}$$

In the formula, Z is a relative viscosity (ηrel) of a solution having a concentration C, and C is a concentration (%: g/100 ml).

The relative viscosity ηrel was obtained by the following formula.

[Math. 2]

$$\eta \mathrm{rel} = (\mathrm{Pass-through\ time\ of\ solution}) \div (\mathrm{Pass-through\ time\ of\ water})$$

<Measurement of weight average molecular weight (Mw) of polymer>

The weight-average molecular weight of the copolymer was determined by gel permeation chromatography (GPC) under the following conditions.

Apparatus: Alliance HPLC system available from Waters Detector: RI
Columns: TSKgel α-M (two columns), TSKgel α, Tosoh Corporation
Column temperature: 40°C
Flow rate: 0.6 ml/min
Calibration curve: polyethylene oxide standards
Eluent: ion-exchanged water/acetonitrile 84/16 (containing 1.4% sodium nitrate)

<Measurement of pH of polymer>

Deionized water was added to the polymer for dilution to prepare a solution having a concentration of 5% by mass in terms of solid content. The pH of the solution was measured.

<Quantification of N-vinylpyrrolidone and 2-pyrrolidone in polymer>

Quantitative analysis was performed by liquid chromatography under the following conditions.

Apparatus: "NANOSPACE SI-2" (using UV/VIS detector) available from Shiseido Company, Limited
Column: CAPCELLPAK C18 UG120 (inner diameter 1.5 mm, length 250 mm) available from Osaka Soda Co., Ltd., 40°C
Eluent: LC grade methanol (Wako Pure Chemical Industries, Ltd.)/ultrapure water = 1/24 (mass ratio) (0.04% by mass of sodium 1-heptanesulfonate was added)
Flow rate: 100 μL/min

<Quantification of acid group-containing monomer salt in polymer>

Quantitative analysis was performed by liquid chromatography under the following conditions.

Apparatus: Alliance HPLC system available from Waters
Column: Shodex RSpak DE-413L, Shodex RSpak DE-G, available from Showa Denko K.K., 40°C
Eluent: 0.1% aqueous phosphoric acid solution
Flow rate: 1 mL/min

<Evaluation of solubility of polymer in N-methyl-2-pyrrolidone>

N-methyl-2-pyrrolidone (hereinafter also referred to as "NMP") was added to the polymer to prepare a solution having a concentration of 1% by mass in terms of solid content. The solution was stirred well, allowed to stand for 24 hours, and visually observed for evaluation according to the following criteria.

◦ (Good): The solution is transparent and no insoluble matters are observed.
× (Poor): Insoluble matters are observed and/or the solution is opaque.

<Evaluation of solubility of polymer in deionized water>

Deionized water was added to the polymer to prepare a solution having a concentration of 1% by mass in terms of solid content. The solution was stirred well, allowed to stand for 24 hours, and visually observed for evaluation according to the following criteria.

◦ (Good): The solution is transparent and no insoluble matters are observed.
× (Poor): Insoluble matters are observed and/or the solution is opaque.

<Evaluation of solubility of polymer in electrolyte solution, solvent mixture of ethylene carbonate and ethyl methyl carbonate (ethylene carbonate/ethyl methyl carbonate = 3/7 (weight ratio))>

A solvent mixture of ethylene carbonate and ethyl methyl carbonate (ethylene carbonate/ethyl methyl carbonate = 3/7 (weight ratio)) was added to the polymer so as to give a concentration of 0.1% by mass in terms of solid content. The contents were stirred for one hour with a shaker (ROLLER 10 digital available from IKA, 80 rpm). Then, the viscosity of the electrolyte solution was compared with that before the addition of the polymer. The supernatant was diluted two-fold with N,N-dimethylformamide, and the dilution was subjected to measurement using a gel permeation chromatograph (GPC) under the following conditions.

Apparatus: HLC-8320GPC available from TOSOH CORPORATION Detector: RI
Columns: Shodex KD-806M (two columns) and KD-G 4A, available from Showa Denko K.K.
Column temperature: 40°C
Flow rate: 0.8 ml/min
Calibration curve: polystyrene standards
Eluent: N,N-dimethylformamide (containing 0.1% LiBr)

A calibration curve was constructed using polyvinylpyrrolidone K-30 (Nippon Shokubai Co., Ltd.), and the concentration (W4 (ppm)) of the polymer in the supernatant (two-fold diluted) was quantified. The percentage of dissolution of the polymer in the electrolyte solution (ethylene carbonate/ethyl methyl carbonate = 3/7 (weight ratio)) was calculated from the following formula:

$$\text{Percentage of dissolution (\%)} = \text{W4 (ppm)} \times 2/\text{W5 (ppm)} \times 100$$

where W5 (ppm) is a concentration of the polymer in the electrolyte solution, calculated from the amount of the polymer.
The solubility of the polymer in the electrolyte solution was calculated from the following formula:

$$\text{Solubility (\%)} = 0.1 \times \text{percentage of dissolution (\%)}.$$

When the percentage of dissolution was 100%, the solubility was determined to be 0.1% or higher.

(Production Example 1: production of polymer A)

A 1 L reactor made of SUS304 equipped with a Maxblend impeller made of SUS304, a thermometer, a reflux condenser, and a jacket was charged with 420 parts of deionized water. The deionized water was purged with nitrogen at a rate of 200 ml/min for 30 minutes while being stirred at 250 rpm to remove dissolved oxygen. Subsequently, the rate of introducing nitrogen was changed to 30 ml/min, and heating was performed while stirring at 250 rpm such that the inside temperature of the reactor was 80°C. The liquid temperature was stabilized at 80°C. Then, 180 parts of N-vinylpyrrolidone (Nippon Shokubai Co., Ltd., hereinafter also referred to as "NVP"), 87.2 parts of a 4% by mass aqueous solution of lithium acrylate (prepared by neutralizing acrylic acid (Nippon Shokubai Co., Ltd.) with lithium hydroxide, hereinafter also referred to as "AA-Li"), and 45.9 parts of a 10% by mass aqueous solution of 2,2'-azobis(2-methylpropionamidine) dihydrochloride (FUJIFILM Wako Pure Chemical Corporation, hereinafter also referred to as "V-50") as a polymerization initiator were each added dropwise over 120 minutes to initiate polymerization. After the completion of the 120-minute dropwise addition, subsequently, 4.6 parts of the 4% by mass aqueous AA-Li solution was added dropwise over 30 minutes. Also, 1.8 parts of the 10% by mass aqueous V-50 solution was added all at once 30 minutes after the completion of the 120-minute dropwise addition. The solution was kept at 80°C for 240 minutes from the start of the dropwise addition to obtain an NVP/AA-Li copolymer solution.

The NVP/AA-Li copolymer solution was dried in vacuum at 110°C. The dried substance was pulverized to a powder that passed through a JIS standard sieve with an aperture of 500 μm. The powder was further dried in vacuum at 110°C to obtain an NVP/AA-Li copolymer (powder).

(Production Example 2: production of polymer B)

A 1 L reactor equipped with a Maxblend impeller, a thermometer, a reflux condenser, and a jacket was charged with 1.28 parts of sodium hypophosphite monohydrate (FUJIFILM Wako Pure Chemical Corporation) and 438 parts of deionized water. The solution was subjected to the operations from purging with nitrogen to heating as in Production Example 1. The liquid temperature was stabilized at 80°C. Then, 180 parts of NVP, 78.3 parts of a 4% by mass aqueous solution of sodium acrylate (prepared by neutralizing acrylic acid (Nippon Shokubai Co., Ltd.) with sodium hydroxide, hereinafter also referred to as "AA-Na"), and 34.8 parts of the 10% by mass aqueous V-50 solution as a polymerization initiator were each added dropwise over 120 minutes to initiate polymerization. After the completion of the 120-minute dropwise addition, subsequently, 4.1 parts of a 4% by mass aqueous AA-Na solution was added dropwise over 30 minutes. Also, 1.4 parts of the 10% by mass aqueous V-50 solution was added all at once 30 minutes after the completion of the 120-minute dropwise addition. The solution was kept at 80°C for 240 minutes from the start of the dropwise addition to obtain an NVP/AA-Na copolymer solution.

The NVP/AA-Na copolymer solution was dried and pulverized as in Production Example 1 to obtain an NVP/AA-Na copolymer (powder).

(Production Example 3: production of polymer C)

A 1 L reactor equipped with a Maxblend impeller, a thermometer, a reflux condenser, and a jacket was charged with 1.33 parts of sodium hypophosphite monohydrate and 449 parts of deionized water. The solution was subjected to the operations from purging with nitrogen to heating as in Production Example 1. The liquid temperature was stabilized at 80°C. Then, 180 parts of NVP, 90 parts of a 10% by mass aqueous solution of ammonium acrylate (prepared by neutralizing acrylic acid (Nippon Shokubai Co., Ltd.) with ammonia water, hereinafter also referred to as "AA-NH3"), and 36 parts of the 10% by mass aqueous V-50 solution as a polymerization initiator were each added dropwise over 120 minutes to initiate polymerization. After the completion of the 120-minute dropwise addition, subsequently, 4.8 parts of a 10% by mass aqueous AA-NH3 solution was added dropwise over 30 minutes. Also, 1.4 parts of the 10% by mass aqueous V-50 solution was added all at once 30 minutes after the completion of the 120-minute dropwise addition. The solution was kept at 80°C for 240 minutes from the start of the dropwise addition to obtain an NVP/AA-NH3 copolymer solution.

The NVP/AA-NH3 copolymer solution was dried and pulverized as in Production Example 1 to obtain an NVP/AA-NH3 copolymer (powder).

(Production Example 4: production of polymer D)

A 1 L reactor equipped with a Maxblend impeller, a thermometer, a reflux condenser, and a jacket was charged with 311 parts of deionized water. The solution was subjected to the operations from purging with nitrogen to heating as in Production Example 1. The liquid temperature was stabilized at 80°C. Then, 150 parts of NVP, 79.2 parts of a 10% by mass aqueous AA-NH3 solution, 79.2 parts of a 10% by mass aqueous solution of 2-methoxyethyl acrylate (FUJIFILM Wako Pure Chemical Corporation, hereinafter also referred to as "MEA"), and 41.7 parts of the 10% by mass aqueous V-50

solution as a polymerization initiator were each added dropwise over 120 minutes to initiate polymerization. After the completion of the 120-minute dropwise addition, subsequently, a 10% by mass aqueous AA-NH3 solution and a 10% by mass aqueous MEA solution each in an amount of 4.2 parts were added dropwise over 30 minutes. Also, 1.7 parts of the 10% by mass aqueous V-50 solution was added all at once 30 minutes after the completion of the 120-minute dropwise addition. The solution was kept at 80°C for 240 minutes from the start of the dropwise addition to obtain an NVP/AA-NH3/MEA copolymer solution.

The NVP/AA-NH3/MEA copolymer solution was dried and pulverized as in Production Example 1 to obtain an NVP/AA-NH3/MEA copolymer (powder).

(Production Example 5: production of polymer E)

A 1 L reactor made of SUS304 equipped with a Maxblend impeller made of SUS304, a thermometer, a reflux condenser, and a jacket was charged with 0.33 parts of a 0.05% aqueous copper sulfate solution (the amount of copper sulfate relative to NVP and AA-Na was 0.4 ppm) and 230.8 parts of deionized water. The solution was purged with nitrogen at a rate of 200 ml/min for 30 minutes while being stirred at 250 rpm to remove dissolved oxygen. Subsequently, the rate of introducing nitrogen was changed to 30 ml/min, and heating was performed while stirring at 250 rpm such that the inside temperature of the reactor was 60°C. Subsequently, while the temperature was maintained at 60°C, 444.4 parts of a 90% aqueous NVP solution (400 parts of NVP was diluted with 44.4 parts of deionized water), 179.6 parts of a 4% aqueous AA-Na solution (19.8 parts of a 37% aqueous AA-Na solution was diluted with 163.5 parts of deionized water), 28.1 parts of a 15% aqueous hydrogen peroxide solution (16.1 parts of a 35% hydrogen peroxide solution (Tokyo Chemical Industry Co., Ltd.) was diluted with 21.5 parts of deionized water) (the amount of hydrogen peroxide relative to NVP and AA-Na was 1.0%), and 16.0 parts of a 3% aqueous ammonia solution (2.4 parts of a 28% aqueous ammonia solution (Wako Pure Chemical Industries, Ltd.) was diluted with 20.2 parts of deionized water) (the amount of ammonia relative to NVP and AA-Na was 0.12%) were separately added dropwise over 180 minutes.

After the completion of the sequential dropwise addition of the raw materials, 3.7 parts of a 4% aqueous AA-Na solution and 6.7 parts of a 3% aqueous ammonia solution (the amount of ammonia relative to NVP and AA-Na was 0.05%) were added dropwise over 30 minutes.

The temperature was raised to 80°C 240 minutes after the start of the dropwise addition of NVP, and 4.8 parts of the 15% aqueous hydrogen peroxide solution (the amount of hydrogen peroxide relative to NVP and AA-Na was 0.18%) was added dropwise over 30 minutes.

Subsequently, 330 minutes after the start of the dropwise addition of NVP, 4.8 parts of the 15% aqueous hydrogen peroxide solution (the amount of hydrogen peroxide relative to NVP was 0.18%) was added dropwise over 30 minutes, and the solution was kept at 80°C for one hour to obtain an NVP/AA-Na copolymer solution.

The NVP/AA-Na copolymer solution was spray-dried to obtain an NVP/AA-Na copolymer (powder).

(Production Example 6: production of polymer F)

A reactor equipped with a Maxblend impeller was charged with an aqueous copper sulfate solution and deionized water. The solution was subjected to the operations from purging with nitrogen to heating as in Production Example 5. The liquid temperature was stabilized at 60°C. Then, 444.4 parts of a 90% aqueous NVP solution, 165.0 parts of a 4% aqueous AA-Na solution, 38.8 parts of a 25% hydrogen peroxide solution (the amount of hydrogen peroxide relative to NVP and AA-Na was 2.4%), and 21.1 parts of a 3% aqueous ammonia solution (the amount of ammonia relative to NVP and AA-Na was 0.16%) were separately added dropwise over 180 minutes.

After the completion of the sequential dropwise addition of the raw materials, 18.3 parts of a 4% aqueous AA-Na solution and 8.8 parts of a 3% aqueous ammonia solution (the amount of ammonia relative to NVP and AA-Na was 0.06%) were added dropwise over 30 minutes.

The temperature was raised to 80°C 240 minutes after the start of the dropwise addition of NVP, and 3.4 parts of a 25% hydrogen peroxide solution (the amount of hydrogen peroxide relative to NVP and AA-Na was 0.21%) was added dropwise over 30 minutes.

Subsequently, 330 minutes after the start of the dropwise addition of NVP, 3.4 parts of a 25% hydrogen peroxide solution (the amount of hydrogen peroxide relative to NVP and AA-Na was 0.21%) was added dropwise over 30 minutes, and the solution was kept at 80°C for one hour to obtain an NVP/AA-Na copolymer solution.

The NVP/AA-Na copolymer solution was spray-dried to obtain an NVP/AA-Na copolymer (powder).

(Production Example 7: production of polymer G)

A 1 L reactor equipped with a Maxblend impeller, a thermometer, a reflux condenser, and a jacket was charged with 0.34 parts of a 0.05% aqueous copper sulfate solution (the amount of copper sulfate relative to the monomers was 0.4

ppm) and 230.4 parts of deionized water. The solution was subjected to the operations from purging with nitrogen to heating as in Production Example 5. The liquid temperature was stabilized at 60°C. Then, 388.9 parts of a 90% aqueous NVP solution, 23.5 parts of a 25% hydrogen peroxide solution (the amount of hydrogen peroxide relative to the monomers was 1.4%), and 21.8 parts of a 3% aqueous ammonia solution (the amount of ammonia relative to the monomers was 0.16%) were separately added dropwise over 180 minutes; and 259.7 parts of an aqueous AA-Na/PEGMA(9) solution (20.5 parts of a 37% aqueous AA-Na solution and 63.1 parts of polyethylene glycol monomethyl ether acrylate (n = about 9) (Tokyo Chemical Industry Co., Ltd., hereinafter also referred to as "PEGMA(9)") was diluted with 181.5 parts of deionized water) were added dropwise over 240 minutes.

After the completion of the sequential dropwise addition of NVP, 9.1 parts of a 3% aqueous ammonia solution (the amount of ammonia relative to the monomers was 0.06%) was added dropwise over 30 minutes.

The temperature was raised to 80°C 240 minutes after the start of the dropwise addition of NVP, and 5.3 parts of an aqueous AA-Na/PEGMA(9) solution and 2.1 parts of a 25% hydrogen peroxide solution (the amount of hydrogen peroxide relative to the monomers was 0.12%) were separately added dropwise over 30 minutes.

Subsequently, 330 minutes after the start of the dropwise addition of NVP, 2.1 parts of a 25% hydrogen peroxide solution (the amount of hydrogen peroxide relative to the monomers was 0.12%) was added dropwise over 30 minutes, and the solution was kept at 80°C for one hour to obtain an NVP/AA-Na/PEGMA(9) copolymer solution.

The NVP/AA-Na/PEGMA(9) copolymer solution was spray-dried to obtain an NVP/AA-Na/PEGMA(9) copolymer (dried product).

(Production Example 8: production of polymer H)

A 1 L reactor equipped with a Maxblend impeller, a thermometer, a reflux condenser, and a jacket was charged with 0.35 parts of a 0.05% aqueous copper sulfate solution (the amount of copper sulfate relative to the monomers was 0.4 ppm) and 245.2 parts of deionized water. The solution was subjected to the operations from purging with nitrogen to heating as in Production Example 5. The liquid temperature was stabilized at 60°C. Then, 400.0 parts of a 90% aqueous NVP solution, 231.7 parts of an aqueous AA-Na/PEGMA(9) solution (21.1 parts of a 37% aqueous AA-Na solution and 64.9 parts of PEGMA(9) were diluted with 186.6 parts of deionized water), 25.3 parts of a 15% hydrogen peroxide solution (the amount of hydrogen peroxide relative to the monomers was 0.88%), and 22.4 parts of a 3% aqueous ammonia solution (the amount of ammonia relative to the monomers was 0.16%) were separately added dropwise over 180 minutes.

After the completion of the sequential dropwise addition of the raw materials, 40.9 parts of an aqueous AA-Na/PEGMA(9) solution was added dropwise over 90 minutes, and 9.3 parts of a 3% aqueous ammonia solution (the amount of ammonia relative to the monomers was 0.06%) was added dropwise over 30 minutes.

The temperature was raised to 80°C 240 minutes after the start of the dropwise addition of NVP, and 2.2 parts of a 15% hydrogen peroxide solution (the amount of hydrogen peroxide relative to the monomers was 0.08%) was added dropwise over 30 minutes.

Subsequently, 330 minutes after the start of the dropwise addition of NVP, 2.2 parts of a 15% hydrogen peroxide solution (the amount of hydrogen peroxide relative to the monomers was 0.08%) was added dropwise over 30 minutes, and the solution was kept at 80°C for one hour to obtain an NVP/AA-Na/PEGMA(9) copolymer solution.

The NVP/AA-Na/PEGMA(9) copolymer solution was dried in vacuum to obtain an NVP/AA-Na/PEGMA(9) copolymer (dried product).

(Production Example 9: production of polymer I)

A 1 L reactor equipped with a Maxblend impeller, a thermometer, a reflux condenser, and a jacket was charged with 0.31 parts of a 0.05% aqueous copper sulfate solution (the amount of copper sulfate relative to the monomers was 0.4 ppm) and 216.8 parts of deionized water. The solution was subjected to the operations from purging with nitrogen to heating as in Production Example 5. The liquid temperature was stabilized at 60°C. Then, 311.1 parts of a 90% aqueous NVP solution, 330.2 parts of an aqueous AA-Na/PEGMA(13) solution (18.6 parts of a 37% aqueous AA-Na solution and 95.6 parts of polyethylene glycol monomethyl ether acrylate (n = about 13) (Tokyo Chemical Industry Co., Ltd., hereinafter also referred to as "PEGMA(13)") were diluted with 274.3 parts of deionized water), 21.3 parts of a 25% hydrogen peroxide solution (the amount of hydrogen peroxide relative to the monomers was 1.4%), and 19.8 parts of a 3% aqueous ammonia solution (the amount of ammonia relative to the monomers was 0.16%) were separately added dropwise over 180 minutes.

After the completion of the sequential dropwise addition of the raw materials, 58.3 parts of an aqueous AA-Na/PEGMA(13) solution was added dropwise over 90 minutes, and 8.3 parts of a 3% aqueous ammonia solution (the amount of ammonia relative to the monomers was 0.06%) was added dropwise over 30 minutes.

The temperature was raised to 80°C 240 minutes after the start of the dropwise addition of NVP, and 1.9 parts of a 25% hydrogen peroxide solution (the amount of hydrogen peroxide relative to the monomers was 0.12%) was added dropwise over 30 minutes.

Subsequently, 330 minutes after the start of the dropwise addition of NVP, 1.9 parts of a 25% hydrogen peroxide solution (the amount of hydrogen peroxide relative to the monomers was 0.12%) was added dropwise over 30 minutes, and the solution was kept at 80°C for one hour to obtain an NVP/AA-Na/PEGMA(13) copolymer solution.

The NVP/AA-Na/PEGMA(13) copolymer solution was dried in vacuum to obtain an NVP/AA-Na/PEGMA(13) copolymer (dried product).

Polymer J: polyvinylpyrrolidone K-30 (Nippon Shokubai Co., Ltd.)
Polymer K: Polyvinylpyrrolidone (Aldrich, product name: PVP-360, average mol wt 360,000)

(Production Example 10: production of polymer L)

An NVP/AA-Li copolymer (powder) was obtained as in Production Example 1, except that the copolymerization ratio of NVP/AA-Li was changed to 76/24.

(Production Example 11: production of polymer M)

An NVP/AA-NH3 copolymer (powder) was obtained as in Production Example 1, except that AA-Li was changed to AA-NH3 and the copolymerization ratio of NVP/AA-NH3 was changed to 80/20.

(Examples 1 to 9, Comparative Examples 1 to 4)

The polymers A to M were subjected to measurements of K value, weight average molecular weight (Mw), pH, amounts of N-vinylpyrrolidone and 2-pyrrolidone, and amount of (meth)acrylic acid salt by the methods described above. In addition, the solubilities in NMP, deionized water, and an electrolyte solution (ethylene carbonate/ethyl methyl carbonate = 3/7 (weight ratio)) were evaluated by the method described above.

The polymers J and K were subjected to the following additional evaluations.

<Evaluation 2 of solubility of polymer in electrolyte solution, solvent mixture of ethylene carbonate and ethyl methyl carbonate (ethylene carbonate/ethyl methyl carbonate = 3/7 (weight ratio))>

To each of the polymers J and K was added a solvent mixture of ethylene carbonate and ethyl methyl carbonate (ethylene carbonate/ethyl methyl carbonate = 3/7 (weight ratio)) so as to give a concentration of 1.2% by mass in terms of solid content. Except for this, the evaluation of solubility of the pollymer in the solvent mixture of the electrolyte solution was performed as described above.

The percentage of dissolution of the copolymer in the electrolyte solution (ethylene carbonate/ethyl methyl carbonate = 3/7 (weight ratio)) was calculated. Both the polymers J and K had a percentage of dissolution of 100%. In other words, the polymers J and K both had a solubility of 1.2% or higher.

The results are shown in Tables 1 and 2.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Polymer No. | | A | B | C | D | E | F | G | H | I |
| Polymerization monomer (parts) | NVP | 98 | 98 | 95 | 90 | 98 | 98 | 83 | 83 | 73 |
| | AA-Li | 2 | - | - | - | - | - | - | - | - |
| | AA-Na | - | 2 | - | - | 2 | 2 | 2 | 2 | 2 |
| | AA-NH3 | - | - | 5 | 5 | - | - | - | - | - |
| | MEA | - | - | - | 5 | - | - | - | - | - |
| | PEGMA(9) | - | - | - | - | - | - | 15 | 15 | - |
| | PEGMA(13) | - | - | - | - | - | - | - | - | 25 |
| K value | | 41.7 | 26.4 | 30.7 | 45.2 | 34.2 | 19.0 | 28.2 | 50.1 | 29.9 |
| Mw | | 41,000 | 14,000 | 15,000 | 32,000 | 33,000 | 7,600 | 25,000 | 86,000 | 30,000 |
| pH (5% aqueous solution) | | 8.7 | 7.0 | 7.8 | 8.1 | 4.9 | 4.4 | 5.5 | 6.9 | 5.5 |
| NVP_ppm | | 104 | 51 | 54 | 105 | 2 | 5 | 0 | 0 | 0 |
| 2-Py_ppm | | 111 | 294 | 449 | 259 | 7,270 | 11,521 | 8,458 | 6,293 | 6,890 |
| AA salt_ppm | | 0 | 0 | 0 | 5 | 17 | 0 | 0 | 0 | 0 |
| Solubility in NMP (1%) | | ○ | ○ | ○ | ○ | ○ | ○ | ○ | ○ | ○ |
| Solubility in water (1%) | | ○ | ○ | ○ | ○ | ○ | ○ | ○ | ○ | ○ |
| Percentage of dissolution in electrolyte solution_wt% | | 0 | 0 | 0 | 0 | 0 | 0 | 0 | 0 | 0 |
| Solubility in electrolyte solution_wt% | | 0 | 0 | 0 | 0 | 0 | 0 | 0 | 0 | 0 |
| Viscosity of electrolyte solution | | No change | No change | No change | No change | No change | No change | No change | No change | No change |

[Table 2]

| | | Comparative Example 1 | Comparative Example 2 | Comparative Example 3 | Comparative Example 4 |
|---|---|---|---|---|---|
| Polymer No. | | J | K | L | M |
| Polymerization monomer (parts) | NVP | 100 | 100 | 76 | 80 |
| | AA-Li | - | - | 24 | - |
| | AA-Na | - | - | - | - |
| | AA-NH3 | - | - | - | 20 |
| | MEA | - | - | - | - |
| K value | | 28.8 | 91.2 | 136.6 | 69.4 |
| Mw | | 22,000 | 420,000 | 320,000 | 54,000 |
| pH (5% aqueous solution) | | 3.7 | 5.6 | 11.0 | 8.7 |
| NVP_ppm | | 0 | 144 | 125 | 37 |
| 2-Py_ppm | | 12,541 | 8,990 | 0 | 420 |
| AA salt_ppm | | - | - | 0 | 150 |
| Solubility in NMP (1%) | | ○ | ○ | × | × |
| Solubility in water (1%) | | ○ | ○ | ○ | ○ |
| Percentage of dissolution in electrolyte solution_wt% | | 100 | 100 | 0 | 0 |
| Solubility in electrolyte solution_wt% | | 1.2 or higher | 1.2 or higher | 0 | 0 |
| Viscosity of electrolyte solution | | Viscosity increased | Viscosity increased | No change | No change |

The results demonstrate that polyvinylpyrrolidone (Comparative Examples 1 and 2) dissolves in NMP and water and also dissolves in the electrolyte solution to a concentration of 1.2% or higher, increasing the viscosity of the electrolyte solution, whereas the NVP/AA salt copolymers of the present invention (Examples 1 to 9) maintain their solubility in NMP and water but less dissolve in the electrolyte solution, preventing or reducing an increase in the viscosity of the electrolyte solution. In a battery application, an increase in the viscosity of the solvent of the electrolyte solution may impair the battery performance, for example. Furthermore, the copolymers in which the proportion of the AA salt is higher than 15% by mass (Comparative Examples 3 and 4) do not dissolve in the electrolyte solution, but also do not dissolve in NMP. Thus, these copolymers are disadvantageous because they cannot be added in the case of using NMP as a solvent (e.g., in the case of adding any of the copolymers in a positive electrode slurry for battery applications). The copolymers of Comparative Examples 3 and 4 have a K value of more than 60 and dissolve in water, but are disadvantageous because they cause an increase in the viscosity of water.

(Examples 10 to 29, Comparative Examples 5 to 22)

A 110 ml screw-cap tube was charged with 80 g of deionized water or NMP and 0.5% by mass of any of the polymers A to M. The contents were stirred with a stirrer tip (2.5 cm). To the polymer solution was added 0.05% by mass of carbon nanotube (VGCF-H (registered trademark, Showa Denko K.K.; multi-walled carbon nanotube having a fiber diameter of about 150 nm and a fiber length of 10 to 20 μm, hereinafter also referred to as "CNT") or carbon black (Mitsubishi Carbon Black #10, hereinafter also referred to as "CB"). The contents were stirred for one minute (magnetic stirrer stirring speed: HIGH, scale 9), followed by standing for one day. Thereafter, the dispersion stability was visually evaluated. Comparative Examples 5, 6, 14, and 15 were evaluated by the same method, except that no polymer was added.

Evaluation was performed using the following criteria.

◦ (Good): The supernatant is black and the background is not visible.
× (Poor): The supernatant is almost transparent and the background is visible.

The results for the CNT dispersions are shown in Tables 3 and 4, and the results for the CB dispersions are shown in Tables 5 and 6.

[Table 3]

| | | Example 10 | Example 11 | Example 12 | Example 13 | Example 14 | Example 15 | Example 16 | Example 17 | Example 18 | Example 19 |
|---|---|---|---|---|---|---|---|---|---|---|---|
| CNT dispersion No. | | Liquid 1 | Liquid 2 | Liquid 3 | Liquid 4 | Liquid 5 | Liquid 6 | Liquid 7 | Liquid 8 | Liquid 9 | Liquid 10 |
| Formulation (wt%) | Polymer A | 0.5 | 0.5 | - | - | - | - | - | - | - | - |
| | Polymer B | - | - | 0.5 | - | - | - | - | - | - | - |
| | Polymer C | - | - | - | 0.5 | - | - | - | - | - | - |
| | Polymer D | - | - | - | - | 0.5 | - | - | - | - | - |
| | Polymer E | - | - | - | - | - | 0.5 | - | - | - | - |
| | Polymer F | - | - | - | - | - | - | 0.5 | - | - | - |
| | Polymer G | - | - | - | - | - | - | - | 0.5 | - | - |
| | Polymer H | - | - | - | - | - | - | - | - | 0.5 | - |
| | Polymer I | - | - | - | - | - | - | - | - | - | 0.5 |
| | CNT | 0.05 | 0.05 | 0.05 | 0.05 | 0.05 | 0.05 | 0.05 | 0.05 | 0.05 | 0.05 |
| | Solvent type | water | NMP | water | water | water | water | water | water | water | water |
| | Amount of solvent | Amount that results in solid concentration of 0.5 wt% | | | | | | | | | |
| Dispersibility | | ○ | ○ | ○ | ○ | ○ | ○ | ○ | ○ | ○ | ○ |

[Table 4]

| | | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|
| CNT dispersion No. | | Liquid 11 | Liquid 12 | Liquid 13 | Liquid 14 | Liquid 15 | Liquid 16 | Liquid 17 | Liquid 18 | Liquid 19 |
| Formulation (wt%) | Polymer J | - | - | 0.5 | 0.5 | - | - | - | - | - |
| | Polymer K | - | - | - | - | 0.5 | - | - | - | - |
| | Polymer L | - | - | - | - | - | 0.5 | 0.5 | - | - |
| | Polymer M | - | - | - | - | - | - | - | 0.5 | 0.5 |
| | CNT | 0.05 | 0.05 | 0.05 | 0.05 | 0.05 | 0.05 | 0.05 | 0.05 | 0.05 |
| | Solvent type | water | NMP | water | NMP | water | water | NMP | water | NMP |
| | Amount of solvent | Amount that results in solid concentration of 0.5 wt% | | | | | | | | |
| Dispersibility | | × | × | ○ | ○ | × | × | × | × | × |

[Table 5]

| | | Example 20 | Example 21 | Example 22 | Example 23 | Example 24 | Example 25 | Example 26 | Example 27 | Example 28 | Example 29 |
|---|---|---|---|---|---|---|---|---|---|---|---|
| CB dispersion No. | | Liquid 1 | Liquid 2 | Liquid 3 | Liquid 4 | Liquid 5 | Liquid 6 | Liquid 7 | Liquid 8 | Liquid 9 | Liquid 10 |
| Formulation (wt%) | Polymer A | 0.5 | 0.5 | - | - | - | - | - | - | - | - |
| | Polymer B | - | - | 0.5 | - | - | - | - | - | - | - |
| | Polymer C | - | - | - | 0.5 | - | - | - | - | - | - |
| | Polymer D | - | - | - | - | 0.5 | - | - | - | - | - |
| | Polymer E | - | - | - | - | - | 0.5 | - | - | - | - |
| | Polymer F | - | - | - | - | - | - | 0.5 | - | - | - |
| | Polymer G | - | - | - | - | - | - | - | 0.5 | - | - |
| | Polymer H | - | - | - | - | - | - | - | - | 0.5 | - |
| | Polymer I | - | - | - | - | - | - | - | - | - | 0.5 |
| | CB | 0.05 | 0.05 | 0.05 | 0.05 | 0.05 | 0.05 | 0.05 | 0.05 | 0.05 | 0.05 |
| | Solvent type | water | NMP | water | water | water | water | water | water | water | water |
| | Amount of solvent | Amount that results in solid concentration of 0.5 wt% | | | | | | | | | |
| Dispersibility | | ○ | ○ | ○ | ○ | ○ | ○ | ○ | ○ | ○ | ○ |

[Table 6]

| | | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 |
|---|---|---|---|---|---|---|---|---|---|---|
| CB dispersion No. | | Liquid 11 | Liquid 12 | Liquid 13 | Liquid 14 | Liquid 15 | Liquid 16 | Liquid 17 | Liquid 18 | Liquid 19 |
| Formulation (wt%) | Polymer J | - | - | 0.5 | 0.5 | - | - | - | - | - |
| | Polymer K | - | - | - | - | 0.5 | - | - | - | - |
| | Polymer L | - | - | - | - | - | 0.5 | 0.5 | - | - |
| | Polymer M | - | - | - | - | - | - | - | 0.5 | 0.5 |
| | CB | 0.05 | 0.05 | 0.05 | 0.05 | 0.05 | 0.05 | 0.05 | 0.05 | 0.05 |
| | Solvent type | water | NMP | water | NMP | water | water | NMP | water | NMP |
| | Amount of solvent | Amount that results in solid concentration of 0.5 wt% | | | | | | | | |
| Dispersibility | | × | × | ○ | ○ | × | × | × | × | × |

The results demonstrate that in cases where no polymer was added (Comparative Examples 5, 6, 14, and 15), the CNT or CB settled or floated within one day, resulting in an almost transparent solution, whereas the NVP/AA salt copolymers of the present invention (Examples 10 to 29) and the low molecular weight polyvinylpyrrolidone (Comparative Examples 7, 8, 16, and 17) maintained the CNT and CB in a well-dispersed state even after one day. On the other hand, the high molecular weight polyvinylpyrrolidone (Comparative Examples 9 and 18) did not maintain the CNT and CB in a dispersion state after one day. For such dispersions in which the CB or CNT concentration is low, the low molecular weight polyvinylpyrrolidone and the N-vinyl lactam copolymer of the present disclosure are better. Furthermore, since the solubility of the polymers L and M in the NMP solvent is lower than 1%, they do not contribute to the dispersibility of CNT and CB in the NMP solvent (Comparative Examples 11, 13, 20, and 22). The polymers L and M also do not contribute to the dispersibility of CNT and CB in water (Comparative Examples 10, 12, 19, and 21).

After 268 hours, these test solutions were allowed to stand further and the state was checked. As a result, the polymers G to I were found to have a better dispersion ability than the others. This is considered to be because the dispersion stability was more improved by the steric repulsion effect of PEGMA copolymerized as the third component.

(Examples 30 and 31, Comparative Example 23)

For the polymers B and G, the polymer in an amount of 0.2 g (0.5% by mass) in terms of solid content was weighed into a 50 ml screw-cap tube, and deionized water was added thereto to make 40 g. The aqueous polymer solution was stirred with a stirrer tip (2.5 cm) and dissolution of the polymer was confirmed. Next, 0.02 g (0.05% by mass) of carbon nanotube (hereinafter also referred to as "CNT") was added to the aqueous polymer solution, and the contents were stirred for 24 hours or more (magnetic stirrer stirring speed: scale 5).

The following describes the type of CNT used. - CNT-2: K-Nanos-300T, Kumho Petrochemical, multi-walled carbon nanotube having a fiber diameter of 10 to 15 nm

The dispersion was then allowed to stand for a certain period of time, and thereafter, the dispersion stability was visually evaluated.

Comparative Example 23 was evaluated by the same method, except that no polymer was added.

Comparative Example 23 in which no polymer was added showed the state indicated by "× (Poor): The supernatant is almost transparent and the background is visible" (most of CNT settled) after one minute of standing, whereas Examples 30 and 31 in which the polymers B and G were added, respectively, showed the state indicated by "o (Good): The supernatant is black and the background is not visible" (uniform dispersion was achieved) even after one week (168 hours).

After 336 hours, these test dispersions were allowed to stand further and the state was checked. As a result, the polymer G was found to have a better dispersion ability than the polymer B. This is considered to be because the dispersion stability was more improved by the steric repulsion effect of PEGMA copolymerized as the third component.

(Example 32, Comparative Example 24)

For the polymer G (Example 32) and the polymer J (Comparative Example 24), the polymer in an amount of 0.02 g (0.05% by mass) in terms of solid content was weighed into a 50 ml screw-cap tube, and deionized water was added thereto to make 40 g. The aqueous polymer solution was stirred with a stirrer tip (2.5 cm) and dissolution of the polymer was confirmed. Next, 0.02 g (0.05% by mass) of carbon nanotube (hereinafter also referred to as "CNT") was added to the aqueous polymer solution, and the contents were stirred for 24 hours or more (magnetic stirrer stirring speed: scale 5).

The following describes the type of CNT used. - CNT-2: K-Nanos-300T, Kumho Petrochemical, multi-walled carbon nanotube having a fiber diameter of 10 to 15 nm

The solution was then allowed to stand for five hours, and thereafter, the dispersion stability was visually evaluated.

Comparative Example 24 showed the state indicated by "Δ (Fair): The supernatant is almost transparent but the background is not visible" (two-layer separation was observed), whereas Example 32 in which the polymer G was added showed the state indicated by "o (Good): The supernatant is black and the background is not visible" (uniform dispersion was achieved).

The dispersant in the present invention achieved good dispersion stability even when the amount of the dispersant was reduced.

(Production Examples 12 to 14)

NVP/AA-Na copolymers (powders) (polymers N, O, and P) were obtained as in Production Example 6, except that the copolymerization ratio of NVP/AA-Na was changed to 95/5, 90/10, and 85/15, respectively, from that of the polymer F.

(Examples 33 to 38, Comparative Example 25)

The dispersion ability of the polymers B, E, J, N, O, and P was evaluated by the following method.
First, the polymer in an amount of 0.38 g (0.75%) in terms of solid content, 2.5 g (5%) of CNT-2, and 47.1 g of deionized water were weighed. They were stirred at 2000 rpm for 10 minutes using a planetary centrifugal mixer, and then dispersed for 20 minutes using an ultrasonic homogenizer while being cooled.
After standing for three days, the viscosity was measured using an E-type viscometer.
The type of spindle was 51, and the rotation speed was 0.5 to 250 rpm.
The results are shown in Tables 7 and 8.

[Table 7]

| | | Example 33 | Example 34 | Example 35 | Example 36 | Comparative Example 25 |
|---|---|---|---|---|---|---|
| Polymer No. | | B | N | O | P | J |
| Polymerization monomer (parts) | NVP | 98 | 95 | 90 | 85 | 100 |
| | AA-Na | 2 | 5 | 10 | 15 | - |
| K value | | 26.4 | 20.4 | 26.3 | 32.9 | 28.8 |
| Mw | | 14,000 | 8,000 | 11,000 | 15,000 | 22,000 |
| Solubility in water (1%) | | ○ | ○ | ○ | ○ | ○ |
| Percentage of dissolution in electrolyte solution_wt% | | 0 | 0 | 0 | 0 | 100 |
| Solubility in electrolyte solution_wt% | | 0 | 0 | 0 | 0 | 1.2 or higher |
| Viscosity of electrolyte solution | | No change | No change | No change | No change | Viscosity increased |
| Viscosity after standing for three days (1 rpm)_mPa ·s | | 669 | 83 | 11 | 31 | > 4,850 |
| Viscosity after standing for three days (30 rpm)_mPa ·s | | 105 | 29 | 8 | 14 | > 162 |

[Table 8]

| | | Example 37 | Example 38 |
|---|---|---|---|
| Polymer No. | | B | E |
| Polymerization monomer (parts) | NVP | 98 | 98 |
| | AA-Na | 2 | 2 |
| Initiator system | | V-50/SHP | $H_2O_2$ |
| K value | | 26.4 | 34.2 |
| Solubility in water (1%) | | ○ | ○ |
| Percentage of dissolution in electrolyte solution_wt% | | 0 | 0 |
| Solubility in electrolyte solution_wt% | | 0 | 0 |
| Viscosity of electrolyte solution | | No change | No change |
| Viscosity after standing for three days (1 rpm)_mPa ·s | | 669 | 503 |
| Viscosity after standing for three days (30 rpm)_mPa ·s | | 105 | 97 |

The results in Table 8 demonstrate that use of a hydrogen peroxide initiator (Example 38) during the production of the polymer can reduce the viscosity even when the polymer has a high molecular weight, that is, can achieve better dispersion (stability).

(Production Examples 15 and 16: production of polymers Q and R)

An NVP/AA-Na copolymer (powder) (polymer Q) was obtained as in Production Example 6, except that the copolymerization ratio of NVP/AA-Na was changed to 85/15 from that of the polymer F and the amount of hydrogen peroxide used was reduced to 64% of the amount of hydrogen peroxide used in the polymer F, the amount being taken as 100%.

An NVP/AA-Na copolymer (powder) (polymer R) was obtained as in Production Example 6, except that the copolymerization ratio of NVP/AA-Na was changed to 80/20 from that of the polymer F, and the amount of hydrogen peroxide used was increased to 147% of the amount of hydrogen peroxide used in the polymer F, the amount being taken as 100%.

(Production Example 17: production of polymer S)

A 1 L reactor made of SUS304 equipped with a Maxblend impeller made of SUS304, a thermometer, a reflux condenser, and a jacket was charged with 0.38 parts of a 0.05% aqueous copper sulfate solution (the amount of copper sulfate relative to NVP and AMPS-Na was 0.4 ppm) and 263.7 parts of deionized water. The solution was purged with nitrogen at a rate of 200 ml/min for 30 minutes while being stirred at 250 rpm to remove dissolved oxygen. Subsequently, the rate of introducing nitrogen was changed to 30 ml/min, and heating was performed while stirring at 250 rpm such that the inside temperature of the reactor was 60°C. The liquid temperature was stabilized at 60°C. Then, 477.8 parts of a 90% aqueous NVP solution, 135.4 parts of a 30% aqueous solution of sodium 2-acrylamido-2-methyl-1-propanesulfonate (AMPS-Na), 33.3 parts of a 20% aqueous hydrogen peroxide solution (the amount of hydrogen peroxide relative to NVP and AMPS-Na was 1.4%), and 24.7 parts of a 3% aqueous ammonia solution (the amount of ammonia relative to NVP and AMPS-Na was 0.16%) were separately added dropwise over 180 minutes.

After the completion of the sequential dropwise addition of the raw materials, 23.9 parts of a 30% aqueous AMPS-Na solution was added dropwise over 90 minutes, and 10.3 parts of a 3% aqueous ammonia solution (the amount of ammonia relative to NVP and AMPS-Na was 0.06%) was added dropwise over 30 minutes.

The temperature was raised to 80°C 240 minutes after the start of the dropwise addition of NVP, and 2.9 parts of a 20% hydrogen peroxide solution (the amount of hydrogen peroxide relative to NVP and AMPS-Na was 0.12%) was added dropwise over 30 minutes.

Subsequently, 330 minutes after the start of the dropwise addition of NVP, 2.9 parts of a 20% hydrogen peroxide solution (the amount of hydrogen peroxide relative to NVP and AMPS-Na was 0.12%) was added dropwise over 30 minutes, and the solution was kept at 80°C for one hour to obtain an NVP/AMPS-Na copolymer solution.

(Production Example 18: production of polymer T)

A 1 L reactor made of SUS304 equipped with a Maxblend impeller made of SUS304, a thermometer, a reflux condenser, and a jacket was charged with 0.37 parts of a 0.05% aqueous copper sulfate solution (the amount of copper sulfate relative to NVP and AMPS-Na was 0.4 ppm) and 242.5 parts of deionized water. The solution was purged with nitrogen at a rate of 200 ml/min for 30 minutes while being stirred at 250 rpm to remove dissolved oxygen. Subsequently, the rate of introducing nitrogen was changed to 30 ml/min, and heating was performed while stirring at 250 rpm such that the inside temperature of the reactor was 60°C. The liquid temperature was stabilized at 60°C. Then, 400.0 parts of a 90% aqueous NVP solution, 173.3 parts of a 45% aqueous AMPS-Na solution, 28.0 parts of a 25% hydrogen peroxide solution (the amount of hydrogen peroxide relative to NVP and AMPS-Na was 1.5%), and 23.7 parts of a 3% aqueous ammonia solution (the amount of ammonia relative to NVP and AMPS-Na was 0.16%) were separately added dropwise over 180 minutes.

After the completion of the sequential dropwise addition of the raw materials, 43.3 parts of a 45% aqueous AMPS-Na solution was added dropwise over 90 minutes, and 9.9 parts of a 3% aqueous ammonia solution (the amount of ammonia relative to NVP and AMPS-Na was 0.06%) was added dropwise over 30 minutes.

The temperature was raised to 80°C 240 minutes after the start of the dropwise addition of NVP, and 2.5 parts of a 25% hydrogen peroxide solution (the amount of hydrogen peroxide relative to NVP and AMPS-Na was 0.14%) was added dropwise over 20 minutes.

Subsequently, 330 minutes after the start of the dropwise addition of NVP, 2.5 parts of a 25% hydrogen peroxide solution (the amount of hydrogen peroxide relative to NVP and AMPS-Na was 0.14%) was added dropwise over 20 minutes, and the solution was kept at 80°C for one hour to obtain an NVP/AMPS-Na copolymer solution.

(Production Example 19: production of polymer U)

A 1 L reactor made of SUS304 equipped with a Maxblend impeller made of SUS304, a thermometer, a reflux

condenser, and a jacket was charged with 0.36 parts of a 0.05% aqueous copper sulfate solution (the amount of copper sulfate relative to NVP, AA-Na, and AN was 0.4 ppm) and 182.5 parts of deionized water. The solution was purged with nitrogen at a rate of 200 ml/min for 30 minutes while being stirred at 250 rpm to remove dissolved oxygen. Subsequently, the rate of introducing nitrogen was changed to 30 ml/min, and heating was performed while stirring at 250 rpm such that the inside temperature of the reactor was 60°C. The liquid temperature was stabilized at 60°C. Then, a solution mixture of 380.0 parts of NVP, 27.4 parts of acrylonitrile (hereinafter also referred to as "AN"), and 42.2 parts of deionized water, 195.2 parts of a 20% aqueous AA-Na solution, 43.4 parts of a 25% hydrogen peroxide solution (the amount of hydrogen peroxide relative to NVP, AA-Na, and AN was 2.4%), and 23.6 parts of a 3% aqueous ammonia solution (the amount of ammonia relative to NVP, AA-Na, and AN was 0.16%) were separately added dropwise over 180 minutes.

After the completion of the sequential dropwise addition of the raw materials, 48.8 parts of a 20% aqueous AA-Na solution was added dropwise over 90 minutes, and 9.8 parts of a 3% aqueous ammonia solution (the amount of ammonia relative to NVP, AA-Na, and AN was 0.06%) was added dropwise over 30 minutes.

The temperature was raised to 80°C 240 minutes after the start of the dropwise addition of NVP, and 3.8 parts of a 25% hydrogen peroxide solution (the amount of hydrogen peroxide relative to NVP, AA-Na, and AN was 0.21%) was added dropwise over 30 minutes.

Subsequently, 330 minutes after the start of the dropwise addition of NVP, 3.8 parts of a 25% hydrogen peroxide solution (the amount of hydrogen peroxide relative to NVP, AA-Na, and AN was 0.21%) was added dropwise over 30 minutes, and the solution was kept at 80°C for one hour to obtain an NVP/AA-Na/AN copolymer solution.

(Examples 39 to 45, Comparative Example 26)

The dispersion ability of the polymers O, P, Q, R, S, T, U, and J was evaluated by the following method.

First, the polymer in an amount of 0.5 g (1.0%) in terms of solid content, 3.0 g (6%) of CNT-2, and 46.5 g of deionized water were weighed. They were stirred at 2000 rpm for 10 minutes using a planetary centrifugal mixer, and then dispersed for 20 minutes using an ultrasonic homogenizer while being cooled.

The viscosity was measured using an E-type viscometer immediately after the dispersion and after standing at 50°C for one day.

The type of spindle was 51, and the rotation speed was 0.5 to 250 rpm.

The results are shown in Table 9.

[Table 9]

| | | Example 39 | Example 40 | Example 41 | Example 42 | Example 43 | Example 44 | Example 45 | Comparative Example 26 |
|---|---|---|---|---|---|---|---|---|---|
| Polymer No. | | O | P | Q | R | S | T | U | J |
| Polymerization monomer (parts) | NVP | 90 | 85 | 85 | 80 | 90 | 79 | 83 | 100 |
| | AA-Na | 10 | 15 | 15 | 20 | - | - | 11 | - |
| | AMPS-Na | - | - | - | - | 10 | 21 | - | - |
| | AN | - | - | - | - | - | - | 6 | - |
| K value | | 26.3 | 32.9 | 51.6 | 32.7 | 33.0 | 35.3 | 31.7 | 28.8 |
| Mw | | 11,000 | 15,000 | 36,000 | 14,000 | 24,000 | 25,000 | 15,000 | 22,000 |
| Solubility in water (1 %) | | ○ | ○ | ○ | ○ | ○ | ○ | ○ | ○ |
| Percentage of dissolution in electrolyte solution_wt% | | 0 | 0 | 0 | 0 | 0 | 0 | 0 | 100 |
| Solubility in electrolyte solution_wt% | | 0 | 0 | 0 | 0 | 0 | 0 | 0 | 1.2 or higher |
| Viscosity of electrolyte solution | | No change | No change | No change | No change | No change | No change | No change | Viscosity increased |
| Viscosity immediately after dispersion (1 rpm)_mPa ·s | | 57 | 66 | 168 | 2,469 | 66 | 61 | 53 | > 4,850 |
| Viscosity after standing at 50°C for one day (1 rpm) mPa ·s | | 136 | 107 | 351 | 2,280 | 605 | 335 | 81 | > 4,850 |
| Viscosity immediately after dispersion (30 rpm)_mPa ·s | | 27 | 38 | 67 | > 162 | 28 | 29 | 27 | > 162 |
| Viscosity after standing at 50°C for one day (30 rpm)_mPa ·s | | 50 | 49 | 126 | > 162 | 114 | 93 | 35 | > 162 |

When AA-Na was changed to AMPS-Na, the carbon was dispersed well, but the dispersion stability was better in the case of AA-Na. Furthermore, when AN was copolymerized as the third component, the dispersion stability tended to be more improved.

## Claims

1. An N-vinyl lactam copolymer comprising:

   a structural unit (A) derived from an acid group-containing monomer salt; and
   a structural unit (B) derived from an N-vinyl lactam monomer,
   an amount of the structural unit (A) being 30% by mass or less based on a total amount of the structural unit (A) and the structural unit (B), the total amount being taken as 100% by mass,
   the N-vinyl lactam copolymer having a weight average molecular weight of 1,000 or more and 100,000 or less and a K value of 12 to 60 as determined by the Fikentscher method.

2. The N-vinyl lactam copolymer according to claim 1,
   wherein the structural unit (A) derived from an acid group-containing monomer salt includes at least one of a structural unit (A1) derived from a carboxy group-containing monomer salt or a structural unit (A2) derived from a sulfonic acid group-containing monomer salt.

3. The N-vinyl lactam copolymer according to claim 2,
   wherein when the structural unit (A) includes the structural unit (A1), an amount of the structural unit (A1) is 15% by mass or less based on 100% by mass of a total amount of the structural unit (A) and the structural unit (B) .

4. The N-vinyl lactam copolymer according to claim 2,
   wherein when the structural unit (A) includes the structural unit (A2), an amount of the structural unit (A2) is 30% by mass or less based on the total amount, which is 100% by mass, of the structural unit (A) and the structural unit (B).

5. The N-vinyl lactam copolymer according to any one of claims 1 to 4,
   wherein the N-vinyl lactam copolymer has a solubility in water of 1% by mass or higher.

6. The N-vinyl lactam copolymer according to any one of claims 1 to 5,
   wherein the N-vinyl lactam copolymer has a solubility in an electrolyte solvent of 1% by mass or lower.

7. The N-vinyl lactam copolymer according to any one of claims 1 to 6,
   wherein the N-vinyl lactam copolymer has a weight average molecular weight of 5,000 or more and 100,000 or less.

8. The N-vinyl lactam copolymer according to any one of claims 1 to 7,
   wherein the structural unit (A1) derived from a carboxy group-containing monomer salt is a structural unit derived from at least one selected from the group consisting of lithium acrylate, sodium acrylate, potassium acrylate, and ammonium acrylate.

9. The N-vinyl lactam copolymer according to any one of claims 1 to 8,
   wherein the structural unit (A2) derived from a sulfonic acid group-containing monomer salt is a structural unit derived from at least one selected from the group consisting of sodium, lithium, potassium, and ammonium 2-acrylamido-2-methyl-1-propanesulfonates, sodium, lithium, potassium, and ammonium 2-hydroxy-3-allyloxypropanesulfonates, sodium, lithium, potassium, and ammonium 2-sulfoethylmethacrylates, sodium, lithium, potassium, and ammonium vinylsulfonates, and sodium, lithium, potassium, and ammonium p-styrenesulfonates.

10. A composition comprising:

    an N-vinyl lactam copolymer containing a structural unit (A) derived from an acid group-containing monomer salt and a structural unit (B) derived from an N-vinyl lactam monomer; and
    a carbon material.

11. The composition according to claim 10, further comprising at least one of N-methyl-2-pyrrolidone or water.

**12.** The composition according to claim 10 or 11,
wherein the carbon material includes at least one selected from the group consisting of carbon black, carbon nanofibers, and carbon nanotubes.

**13.** The composition according to any one of claims 10 to 12,
wherein the structural unit (A) derived from an acid group-containing monomer salt includes at least one of a structural unit (A1) derived from a carboxy group-containing monomer salt or a structural unit (A2) derived from a sulfonic acid group-containing monomer salt.

**14.** The composition according to any one of claims 10 to 13,
wherein the structural unit (A) derived from an acid group-containing monomer salt is the structural unit (A1) derived from a carboxy group-containing monomer salt.

**15.** A method for producing the N-vinyl lactam copolymer according to any one of claims 1 to 9, the method comprising polymerizing monomer components including an acid group-containing monomer salt and an N-vinyl lactam monomer.

## INTERNATIONAL SEARCH REPORT

International application No.
**PCT/JP2023/020682**

**A. CLASSIFICATION OF SUBJECT MATTER**

***C08F 226/06***(2006.01)i; ***C08F 220/04***(2006.01)i; ***C08F 220/06***(2006.01)i; ***C08K 3/02***(2006.01)i; ***C08K 3/04***(2006.01)i; ***C08K 7/06***(2006.01)i; ***C08L 39/04***(2006.01)i; ***H01M 4/62***(2006.01)i
FI: C08F226/06; C08F220/04; C08F220/06; C08K3/02; C08K3/04; C08K7/06; C08L39/04; H01M4/62 Z

According to International Patent Classification (IPC) or to both national classification and IPC

**B. FIELDS SEARCHED**

Minimum documentation searched (classification system followed by classification symbols)

C08F226/06; C08F220/04; C08F220/06; C08K3/02; C08K3/04; C08K7/06; C08L39/04; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 9-506385 A (BASF AG) 24 June 1997 (1997-06-24)<br>claims, examples | 1-9, 15 |
| A | JP 2001-343746 A (SANYO CHEM. IND., LTD.) 14 December 2001 (2001-12-14)<br>claims, examples | 1-9, 15 |
| A | JP 2007-126397 A (TOAGOSEI CO., LTD.) 24 May 2007 (2007-05-24)<br>claims, examples | 1-9, 15 |
| A | JP 2019-131738 A (NIPPON SHOKUBAI CO., LTD.) 08 August 2019 (2019-08-08)<br>claims, examples | 1-9, 15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/020682**

**Box No. III Observations where unity of invention is lacking (Continuation of item 3 of first sheet)**

This International Searching Authority found multiple inventions in this international application, as follows:

The claims are classified into the following two inventions.

(Invention 1) Claims 1-9 and 15

Document 1 (the claims) discloses a process for preparing a pulverulent polymer based on N-vinylcaprolactam by polymerizing (A) 50-100% by weight of N-vinylcaprolactam with (B) 0-50% by weight of further N-vinylcaprolactams, heteroaromatic vinyl compounds, vinyl esters, $C_1$-$C_{10}$-alkyl acrylates or -methacrylates, or a mixture thereof and (C) 0-5% by weight of monoethylenically unsaturated monomers containing acid groups, and a pulverulent polymer prepared by the process. Document 1 (the examples) specifically discloses in example 1 a copolymer having a K value of 34 obtained by copolymerizing in total 495 g of a neutralization product with sodium of 5 g of 2-acrylamido-2-methylpropanesulfonic acid and N-vinylcaprolactam, and in examples 2 and 3 copolymers having a K value of 30-40, comprising 2% by weight of neutralized acrylic acid or methacrylic acid and 98% by weight of N-vinylcaprolactam.

Document 1 does not specifically disclose the weight average molecular weight or the like of the copolymers. However, K value is an index correlated with molecular weight, and copolymers exhibiting the K value of about 30-40 highly likely have a weight average molecular weight of about 5,000-100,000 and fulfil the properties specified in the present invention as the copolymers in the examples of the present application.

Therefore, the inventions in claims 1-9 and 15 lack novelty in light of document 1 and do not have a special technical feature.

Accordingly, the inventions in claims 1-9 and 15 are classified as invention 1.

(Invention 2) Claims 10-14

The inventions in claims 10-14 and claim 1 share the technical feature of pertaining to an N-vinyllactam copolymer having a structural unit (A) derived from a salt of an acid-containing monomer and a structural unit (B) derived from an N-vinyllactam monomer. However, the technical feature is disclosed in document 1, and thus claims 10-14 do not share a same or corresponding special technical feature with claim 1.

In addition, claims 10-14 are not substantially identical to or similarly closely related to any of the claims classified as invention 1.

Accordingly, the inventions in claims 10-14 cannot be classified as invention 1.

Thus, the inventions in claims 10-14 are classified as invention 2.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **1-9 and 15**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

**INTERNATIONAL SEARCH REPORT**
**Information on patent family members**

International application No.
**PCT/JP2023/020682**

| Patent document cited in search report | Publication date (day/month/year) | Patent family member(s) | Publication date (day/month/year) |
|---|---|---|---|
| JP 9-506385 A | 24 June 1997 | EP 733075 A1<br>claims, examples | |
| JP 2001-343746 A | 14 December 2001 | (Family: none) | |
| JP 2007-126397 A | 24 May 2007 | (Family: none) | |
| JP 2019-131738 A | 08 August 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018170218 A
- JP 2016065142 A
- JP 6531926 B